# EUROPÄISCHE PATENTSCHRIFT

(11) **EP 2 925 459 B1**
(45) Veröffentlichungstag und Bekanntmachung des Hinweises auf die Patenterteilung: **31.08.2016**
(21) Anmeldenummer: 13779578.7
(22) Anmeldetag: 18.10.2013
(51) Int. Cl.: B05D 5/00, B05D 7/00, C08K 3/36, C09D 175/12, C25D 11/14, C25D 11/24, C25D 13/12, C23C 26/00, C23C 28/00

(54) **EFFEKT- UND/ODER FARBGEBENDE MEHRSCHICHTLACKIERUNG UND VERFAHREN ZU IHRER HERSTELLUNG SOWIE IHRE VERWENDUNG**
EFFECT- AND/OR COLOUR-INDUCING MULTI-LAYER PAINT AND METHOD FOR THE PRODUCTION THEREOF AND USE THEREOF
PEINTURE MULTICOUCHE À EFFETS ET/OU COLORANTE, PROCÉDÉ DE FABRICATION ET UTILISATION DE LADITE PEINTURE

(30) Priorität: 03.12.2012 US 201261732420 P; 03.12.2012 EP 12195234
(43) Veröffentlichungstag der Anmeldung: 07.10.2015
(73) Patentinhaber: BASF Coatings GmbH, 48165 Münster (DE)
(72) Erfinder: GROENEWOLT, Matthijs, 48167 Münster (DE); AUSTRUP, Berthold, 59394 Nordkirchen (DE); HÜBNER, Katharina, 48317 Drensteinfurt (DE); FRANK, Andrea, 48727 Billerbeck (DE); MÜLLER, Jörg, 59075 Hamm (DE)
(86) Internationale Anmeldenummer: PCT/EP2013/071874
(87) Internationale Veröffentlichungsnummer: WO 2014/086529

(56) Entgegenhaltungen:
- EP-A1- 1 193 278
- DE-A1-102008 060 454
- DE-A1-102009 030 481

## Beschreibung

Die vorliegende Erfindung betrifft eine effekt- und/oder farbgebende Mehrschichtlackierung, die herstellbar ist durch aufeinanderfolgendes Aufbringen einer ersten pigmentierten Basislackbeschichtungszusammensetzung, ggf. einer zweiten pigmentierten Basislackbeschichtungszusammensetzung und einer transparenten Beschichtungszusammensetzung und gemeinsames Härten der Basislackschicht(en) und der transparenten Lackschicht.

Gegenstand der vorliegenden Erfindung sind außerdem mehrstufige Beschichtungsverfahren zur Herstellung der Mehrschichtlackierungen und die Verwendung der Mehrschichtlackierungen.

Im Bereich der Kraftfahrzeugserienlackierung eingesetzte Mehrschichtlackierungen bestehen heute im Allgemeinen aus einer elektrophoretisch aufgebrachten, vor Korrosion und Steinschlag schützenden Grundierung und einer nachfolgend vor Steinschlag schützenden und die Oberfläche glättenden Füllerschicht. Die Füllerschicht wird dabei meist auf die bereits eingebrannte Grundierung aufgebracht und gehärtet. Es ist aber auch möglich, Grundierung und Füllerschicht gemeinsam zu härten. Auf die ausgehärtete Füllerschicht wird anschließend eine Einschichtlackierung oder eine dekorative Zweischichtlackierung aus einer - abhängig vom jeweiligen Farbton - in einem oder mehreren Spritzgängen applizierten farb- und/oder effektgebenden Basislackschicht und einer darauf nass-in-nass applizierten, schützenden Klarlackschicht aufgebracht. Anschließend wird die Einschichtlackierung bzw. werden die Basislackschicht(en) und die Klarlackschicht gemeinsam gehärtet.

Zunehmend sind jedoch die Automobilhersteller bestrebt, die Schichtdicken des Lackaufbaus sowie die Anzahl der Arbeitsgänge und ggf. auch die Anzahl der Schichten zu reduzieren, ohne dass es dabei zu einer Verschlechterung des anwendungstechnischen Eigenschaftsprofils der Mehrschichtlackierungen kommt.

So sind Mehrschichtlackierungen bekannt, bei dem eine oder mehrere Basislackschichten direkt auf eine elektrophoretisch abgeschiedene Grundierung appliziert werden. Über die Basislackschicht(en) wird ggf. eine Klarlackschicht appliziert. Anschließend werden die Basislackschicht(en) und ggf. die Klarlackschicht gemeinsam ausgehärtet. Bei diesem Verfahren wird auf die üblicherweise zwischen KTL- und Basislackschicht liegende Füllerschicht verzichtet.

So beschreibt die WO2006/097201 ein derartiges füllerloses Verfahren zur Herstellung einer Mehrschichtlackierung, bei dem auf eine eingebrannte, kathodisch abgeschiedene Elektrotauchlackgrundierung eine erste pigmentierte Basislackschicht, eine zweite pigmentierte Basislackschicht und eine Klarlackschicht aufgebracht und alle drei Lackschichten gemeinsam gehärtet werden. Hierbei ist es erfindungswesentlich, durch den Zusatz spezieller Lichtschutzmittel in der ersten Basislackschicht den UV Schutz der kathodisch abgeschiedenen Elektrotauchlackgrundierung zu gewährleisten. Als Klarlackbeschichtungszusammensetzung können alle üblicherweise eingesetzten Klarlacke, wie beispielsweise der handelsübliche 2K-Polyurethan-Klarlack EverGloss® der Firma BASF Coatings GmbH, eingesetzt werden.

Die WO2010/060523 beschreibt ebenfalls ein füllerloses Verfahren, bei dem anstelle des Füllers zur Verbesserung des optischen Eindrucks insbesondere bei rauen Untergründen auf die Elektrotauchlackgrundierung zunächst ein pigmentfreier Lack appliziert wird, ehe die Basislackschichten und der abschließende Klarlack aufgebracht werden. Als Klarlackbeschichtungszusammensetzung können wiederum alle üblicherweise eingesetzten Klarlacke, wie beispielsweise der handelsübliche 2K-Polyurethan-Klarlack EverGloss® der Firma BASF Coatings GmbH, eingesetzt werden.

Aus der WO07/044769 ist ein Verfahren zur Herstellung einer Mehrschichtlackierung bekannt, bei dem eine erste Primerlackschicht, eine zweite pigmentierte Basislackschicht und eine Klarlackschicht aufgebracht werden und alle drei Lackschichten gemeinsam gehärtet werden. Die Primerlackschicht enthält mindestens ein caprolactonmodifiziertes lineares Acrylatharz, wodurch ein guter optischer Gesamteindruck der resultierenden Mehrschichtlackierung gewährleistet ist. Als Klarlackbeschichtungszusammensetzung können in dem Verfahren alle bekannten Klarlackbeschichtungszusammensetzungen eingesetzt werden, wobei in den Ausführungsbeispielen eine 1 K-Klarlackbeschichtungszusammensetzung auf Basis eines silanisierten Acrylatharzes eingesetzt wird.

Die WO2010/139375 beschreibt Mehrschichtlackierungen, bei denen auf eine eingebrannte Grundierung und eine eingebrannte Füllerschicht eine konventionelle Basislackschicht und eine Klarlackschicht aufgebracht und gemeinsam gehärtet werden. Die Mehrschichtlackierungen zeichnen sich dadurch aus, dass die Klarlackbeschichtungszusammensetzung neben einer hydroxylgruppenhaltigen Verbindung (A), einer isocyanatgruppenhaltigen Verbindung (B) und einem Aminoplastharz (C) mindestens ein ungesättigtes cyclisches, sterisch gehindertes Amin (D) enthält, um das Auftreten von Kochern zu vermeiden.

Auch aus der WO2007/137632 sind Mehrschichtlackierungen bekannt, bei denen auf eine eingebrannte Grundierung und eine eingebrannte Füllerschicht eine Wasserbasislackschicht und eine Klarlackschicht auf Basis eines 2K-Polyurethanbeschichtungsmittels aufgebracht und gemeinsam gehärtet werden. Zur Verbesserung der Scheibenverklebung enthält die 2K-Polyurethanbeschichtungszusammensetzung als Haftvermittler eine Mischung aus einem Phosphonsäurediester und/oder einem Diphosphonsäurediester und mindestens einem Umsetzungsprodukt eines Monoalkoxysilylamins und/oder Bisalkoxysilylamins mit einem Isocyanurat, wobei dieses Umsetzungsprodukt aber keine freien Isocyanatgruppen mehr aufweist.

Ferner sind aus der WO 10/063332 nichtwässrige Beschichtungsmittelzusammensetzungen bekannt, die mindestens eine Polyhydroxylgruppen-haltige Verbindung (A), mindestens ein Polyisocyanat (B) mit freien oder blockierten Isocyanatgruppen und mit Silangruppen und/oder dessen Dimer und/oder Oligomer, mindestens einen Katalysator (D) für die Vernetzung der Silangruppen und mindestens ein Rheologiehilfsmittel (R) auf Harnstoff-Basis und ggf. zusätzlich ein Rheologiehilfsmittel auf Basis pyrogener Kieselsäure enthalten. Zur Erzielung eines guten optischen Gesamteindruckes (sogenanntes sehr gutes Appearance) ist es erfindungswesentlich, dass die in diesen Beschichtungsmitteln eingesetzte, Polyhydroxylgruppen enthaltende Verbindung (A) auf einem hyperverzweigten, dendritischen hydroxyfunktionellen Polyester basiert, bei dem mindestens eine Hydroxylgruppe mit einer C8- bis C9-Monocarbonsäure verestert ist. Diese Beschichtungsmittel werden nass-in-nass auf einem handelsüblichen Wasserbasislack appliziert und diese zwei Lackschichten werden dann gemeinsam eingebrannt.

Die resultierenden Beschichtungen weisen eine hohe Kratzbeständigkeit und Witterungsbeständigkeit sowie gleichzeitig ein gutes Appearance auf, wobei allerdings noch geringere sogenannte Short-Wave-Werte bei erhöhten Schichtdicken von mindestens 40 µm wünschenswert sind. Wünschenswert ist bei diesen Beschichtungsmitteln außerdem eine Verbesserung der Schleifbarkeit und Polierbarkeit der resultierenden Beschichtungen.

Außerdem sind aus den Anmeldungen EP 1 193 278 A1, DE 10 2008 060 454 A1 und DE 10 2009 030 481 A1 weitere Mehrschichtlackierungen bekannt, welche allerdings nicht füllerlos ausgeführt sind.

Schließlich sind in der noch nicht offengelegten internationalen Patentanmeldung PCT/EP 2012/059611 und in der noch nicht offengelegten internationalen Patentanmeldung PCT/EP2012/058355 Mehrschichtlackierungen beschrieben, bei denen auf eine gehärtete, elektrophoretisch abgeschiedene Grundierung und eine gehärtete Füllerschicht eine Basislackschicht und eine Klarlackschicht aufgebracht werden, wobei es erfindungswesentlich ist, dass die Klarlackbeschichtungszusammensetzung neben einer Polyhydroxylgruppen enthaltenden Komponente (A) eine Isocyanatgruppen und Silangruppen enthaltende Verbindung (B) enthalten, die insbesondere eine Mischung einer Verbindung (B1) mit einem cycloaliphatischen Polyisocyanatgrundkörper und einer Verbindung (B2) mit einem acyclischen aliphatischen Polyisocyanatgrundkörper ist. Der Zusatz von Rheologiehilfsmitteln auf Basis pyrogener Kieselsäure zu den Klarlackbeschichtungsmitteln ist in diesen Anmeldungen ebenso wenig beschrieben wie die Verwendung der Klarlackbeschichtungsmittel in füllerlosen Prozessen.

### Aufgabe

Aufgabe der vorliegenden Erfindung war es daher, Mehrschichtlackierungen der eingangs genannten Art zur Verfügung zu stellen, die gleichzeitig eine stark verringerte Tendenz zum Weißanlaufen bei Feuchtebelastung im Schwitzwasserkonstantklima nach DIN EN ISO 6270-2 September 2005 und einen guten optischen Gesamteindruck - ein gutes sogenanntes Appearance - aufweisen.
Zur Beurteilung des optischen Gesamteindrucks wurde die Messung des Oberflächenprofils der applizierten, eingebrannten Lackfilme mittels der Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long-Wave"), d. h. die Varianz der Lichtintensität für Strukturen im Bereich von 0,6 mm bis 10 mm, sowie in Kurzwelligkeit ("Short-Wave"), d. h. die Varianz der Lichtintensität für Strukturen im Bereich von 0,1 mm bis 0,6 mm, unterteilt. Hierbei ist der Longe-Wave Wert wichtiger, wenn das Blech aus der Entfernung betrachtet wird, während der Short-Wave Wert sehr wichtig wird, wenn das Blech aus der Nähe betrachtet wird. Für einen guten visuellen Eindruck (Appearance) sind - neben niedrigen Long-Wave Messwerten der resultierenden Beschichtungen bei möglichst niedrigen Schichtdicken - vor allem niedrige Short-Wave Messwerte bei einer Schichtdicke von ca. 40 µm ausschlaggebend.

Weiterhin sollten effekt- und/oder farbgebende Mehrschichtlackierungen zur Verfügung gestellt werden, die eine gute Polierbarkeit gewährleisten.

Ferner sollten zur Herstellung der effekt- und/oder farbgebenden Mehrschichtlackierungen Klarlackbeschichtungszusammensetzungen eingesetzt werden können, die zu einem hochgradig witterungsstabilen Netzwerk führen und die gleichzeitig eine hohe Säurefestigkeit gewährleisten. Weiterhin sollten sich die Beschichtungen und Lackierungen, speziell die Klarlackierungen, auch in Schichtdicken > 40 µm herstellen lassen, ohne dass Spannungsrisse auftreten.

Weiterhin sollten die effekt- und/oder farbgebenden Mehrschichtlackierungen eine gute Scheibenverklebung gewährleisten. Eine gute Scheibenverklebung bedeutet dabei, dass es bei der mechanischen Belastung von Verbunden, umfassend mindestens eine Mehrschichtlackierung der eingangs genannten Art, mindestens eine Klebschicht und mindestens eine Scheibe, nicht zu einer Enthaftung zwischen Substrat und Beschichtung, innerhalb der Beschichtung und zwischen Beschichtung und Klebschicht kommt, sondern nur zu einem Kohäsionsbruch innerhalb der Klebschicht.

Darüber hinaus sollten die effekt- und/oder farbgebenden Mehrschichtlackierungen die üblicherweise an die Klarlackschicht bei Automobilserienlackierungen und Autoreparaturlackierungen gestellten Anforderungen erfüllen.

Insbesondere sollten die effekt- und/oder farbgebenden Mehrschichtlackierungen mittels eines sogenannten füllerlosen Prozesses herstellbar sein.

Schließlich sollten die neuen Mehrschichtlackierungen einfach und sehr gut reproduzierbar herstellbar sein und während der Lackapplikation keine ökologischen Probleme bereiten.

### Lösung der Aufgabe

Im Lichte der obengenannten Aufgabenstellung wurde eine effekt- und/- oder farbgebende füllerlose Mehrschichtlackierung gefunden, die dadurch herstellbar ist, dass
(I) zunächst eine Grundierungsbeschichtungszusammensetzung (G) auf einem Substrat elektrophoretisch abgeschieden und ggf. gehärtet wird,
(II) eine erste pigmentierte Basislackbeschichtungszusammensetzung (BL1) auf der in Stufe (I) erhaltenen Grundierung aufgebracht wird,
(III) ggf. eine zweite pigmentierte Basislackbeschichtungszusammensetzung (BL2) auf der in Stufe (II) erhaltenen ersten Basislackschicht aufgebracht wird,
(IV) eine transparente Beschichtungsmittelzusammensetzung (KL) auf Basis mindestens einer Polyhydroxylgruppen-haltigen Verbindung (A) und mindestens einer Polyisocyanatgruppen-haltigen Komponente (B) auf der in Stufe (II) erhaltenen ersten Basislackschicht oder - falls eine zweite Basislackbeschichtungszusammensetzung (BL2) aufgebracht worden ist - auf der in Stufe (III) erhaltenen zweiten Basislackschicht aufgebracht wird und
(V) die erste Basislackschicht, die ggf. vorhandene zweite Basislackschicht und die transparente Lackschicht gemeinsam gehärtet werden,
   dadurch gekennzeichnet, dass
   die transparente Beschichtungsmittelzusammensetzung (KL)
   (i) mindestens ein Rheologiehilfsmittel (R) auf Basis pyrogener Kieselsäure und
   (ii) mindestens eine Polyisocyanatgruppen-haltige Komponente (B) mit mindestens einer Struktureinheit der Formel (I)

      -NR-(X-SiR"x(OR')3-x) (I),

      und/oder mit mindestens einer Struktureinheit der Formel (II)

      -N(X-SiR"x(OR')3-x)n(X'-SiR"y(OR')3-y)m (II),

      mit
      R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
      R' = Wasserstoff, Alkyl oder Cycloalkyl, wobei die Kohlenstoffkette durch nicht benachbarte Sauerstoff-, Schwefel- oder NRa-Gruppen unterbrochen sein kann,
      X,X' = linearer und/oder verzweigter Alkylen oder Cycloalkylenrest mit 1 bis 20 Kohlenstoffatomen,
      R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
      n = 0 bis 2, m = 0 bis 2, m+n = 2 sowie x, y = 0 bis 2 ist,
      enthält.

Gegenstand der vorliegenden Erfindung sind außerdem mehrstufige Beschichtungsverfahren zur Herstellung der füllerlosen Mehrschichtlackierungen und die Verwendung der füllerlosen Mehrschichtlackierungen. Es ist überraschend und war nicht vorhersehbar, dass die erfindungsgemäßen - mittels eine füllerlosen Verfahrens erhältlichen - Mehrschichtlackierungen gleichzeitig eine stark verringerte Tendenz zum Weißanlaufen bei Feuchtebelastung im Schwitzwasserkonstantklima nach DIN EN ISO 6270-2 September 2005 und einen guten optischen Gesamteindruck - ein gutes sogenanntes Appearance - aufweisen.

Ein guter optischer Gesamteindruck bedeutet hierbei insbesondere, dass bei Messung des Oberflächenprofils der applizierten, eingebrannten Lackfilme mittels des Gerätes "Wave Scan" der Firma Byk - Gardner neben niedrigen Long-Wave Messwerten der resultierenden Beschichtungen bei möglichst niedrigen Schichtdicken vor allem niedrige Short-Wave Messwerte bei einer Schichtdicke von ca. 40 µm erreicht werden.

Weiterhin weisen die effekt- und/oder farbgebende Mehrschichtlackierungen eine gute Polierbarkeit auf.

Ferner führen die eingesetzten transparenten Beschichtungsmittelzusammensetzungen zu einem hochgradig witterungsstabilen Netzwerk und gewährleisten gleichzeitig eine hohe Säurefestigkeit. Weiterhin lassen sich die transparenten Beschichtungen und Lackierungen, speziell die Klarlackierungen, auch in Schichtdicken > 40 µm herstellen, ohne dass Spannungsrisse auftreten.

Weiterhin gewährleisten die effekt- und/oder farbgebenden Mehrschichtlackierungen eine gute Scheibenverklebung. Eine gute Scheibenverklebung bedeutet dabei, dass es bei der mechanischen Belastung von Verbunden, umfassend mindestens eine Mehrschichtlackierung der eingangs genannten Art, mindestens eine Klebschicht und mindestens eine Scheibe, nicht zu einer Enthaftung zwischen Substrat und Beschichtung, innerhalb der Beschichtung und zwischen Beschichtung und Klebschicht kommt, sondern nur zu einem Kohäsionsbruch innerhalb der Klebschicht.

Darüber hinaus erfüllen die effekt- und/oder farbgebenden Mehrschichtlackierungen die üblicherweise an die Klarlackschicht bei Automobilserienlackierungen und Autoreparaturlackierungen, der Lackierung von Anbauteilen und von Nutzfahrzeugen gestellten Anforderungen.

Schließlich sind die neuen Mehrschichtlackierungen einfach und sehr gut reproduzierbar herstellbar und bereiten während der Lackapplikation keine ökologischen Probleme.

### Beschreibung der Erfindung

### Die erfindungsgemäß eingesetzten transparenten Beschichtungsmittelzusammensetzungen

Insbesondere handelt es sich bei den erfindungsgemäß eingesetzten transparenten Beschichtungsmitteln um thermisch härtbare Beschichtungsmittel, also bevorzugt um Beschichtungsmittel, die im Wesentlichen frei sind von strahlenhärtbaren ungesättigten Verbindungen, insbesondere völlig frei sind von strahlenhärtbaren ungesättigten Verbindungen. Besonders bevorzugt werden hierbei Klarlackbeschichtungsmittel eingesetzt.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylat-polyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropyl-acrylat, 2-Hydroxypropylmethacrylat, 3-Hydroxypropylacrylat, 3-Hydroxy-propylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Hydroxylgruppenhaltige Verbindungen (C)

Die erfindungsgemäß eingesetzten Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Polyisocyanatgruppen-haltige Komponente (B)

Es ist erfindungswesentlich, dass die transparente Beschichtungsmittelzusammensetzung eine Polyisocyanatgruppen-haltige Komponente (B) enthält, die zusätzlich noch mindestens eine Struktureinheit (I) der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

aufweist, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n=0 bis 2, m= 0 bis 2, m+n = 2 sowie x,y = 0 bis 2 ist.

Bevorzugt sind in der Polyisocyanatgruppen-haltigen Komponente (B) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in der Polyisocyanatgruppenhaltigen Komponente (B) vorhandenen Isocyanatgruppen zu Struktureinheiten (I) und/oder (II), bevorzugt zu Struktureinheiten (I) und (II), umgesetzt worden.

Außerdem bevorzugt sind Polyisocyanatgruppen-haltige Komponenten (B), bei denen der Gesamtgehalt an Struktureinheiten (I) zwischen 3 und 90 mol-%, besonders bevorzugt zwischen 5 und 70 mol-%, jeweils bezogen auf die Gesamtheit der Struktureinheiten (I) plus (II), und der Gesamtgehalt an Struktureinheiten (II) zwischen 97 und 10 mol-%, besonders bevorzugt zwischen 95 und 30 mol-%, jeweils bezogen auf die Gesamtheit der Struktureinheiten (I) plus (II), beträgt.

Die als Grundkörper für die eingesetzte Polyisocyanatgruppen-haltigen Komponente (B) dienenden Di- und/oder Polyisocyanate sind bevorzugt an sich bekannte substituierte oder unsubstituierte aromatische, aliphatische, cycloaliphatische und/oder heterocyclische Polyisocyanate.

Bevorzugt werden als Polyisocyanatgruppen-haltige Komponente (B)
(B1) mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper mit freien oder blockierten Isocyanatgruppen und
(B2) mindestens eine, von der Komponente (B1) verschiedene Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper mit freien oder blockierten Isocyanatgruppen,
eingesetzt, wobei die Komponente (B1) und/oder die Komponente (B2) mindestens eine Struktureinheit der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

aufweisen und die Substituenten jeweils die oben genannte Bedeutung haben.

### Die acyclische, aliphatische Polyisocyanat-Komponente (B2)

Es ist besonders bevorzugt, dass die transparenten Beschichtungsmittelzusammensetzungen mindestens eine, von der Komponente (B1) verschiedene, Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper enthalten.

Die als Grundkörper für die erfindungsgemäß eingesetzten Polyisocyanatgruppenhaltigen Verbindungen (B2) dienenden acyclischen aliphatischen Polyisocyanate sind bevorzugt an sich bekannte substituierte oder unsubstituierte aliphatische Polyisocyanate. Beispiele für bevorzugte Polyisocyanate (B2) sind Tetramethylen-1,4-diisocyanat, Hexamethylen-1,6-diisocyanat, 2,2,4-Trimethylhexane-1,6-diisocyanat, Ethylendiisocyanat, 1,12-Dodecandiisocyanat und Mischungen der vorgenannten Polyisocyanate.

Weiterhin bevorzugte Polyisocyanatgrundkörper für die Komponente (B2) sind die durch Trimerisierung, Dimerisierung, Urethan-, Biuret-, Uretdion- und/oder Allophanatbildung von einem solchen acyclischen aliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform der Erfindung sind die Polyisocyanatgrundkörper für die Komponente (B2) Polyisocyanat-Präpolymerisate mit Urethan-Struktureinheiten, welche durch Umsetzung von Polyolen mit einem stöchiometrischen Überschuss an vorgenannten acyclischen aliphatischen Polyisocyanaten erhalten werden. Solche Polyisocyanat-Präpolymere sind beispielsweise in US-A-4, 598,131 beschrieben.

Besonders bevorzugte Polyisocyanatgrundkörper für die Komponente (B2) sind Hexamethylendiisocyanat und/oder dessen Biuret-Dimer und/- oder Allophanat-Dimer und/oder Isocyanurat-Trimer und/oder dessen Uretdion sowie Mischungen der genannten Polyisocyanatgrundkörper.

Ganz besonders bevorzugte Polyisocyanatgrundkörper für die Komponente (B2) sind Hexamethylendiisocyanat und/oder dessen Isocyanurat-Trimer, ggf. zusammen mit dessen Uretdion.

Die als Komponente (B2) eingesetzten acyclischen aliphatischen Polyisocyanate bzw. deren durch Trimerisierung, Dimerisierung, Urethan-, Biuret-, Uretdion- und/oder Allophanatbildung abgeleiteten Polyisocyanate können zusätzlich noch mindestens eine Struktureinheit (I) der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

enthalten, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

Bevorzugt eingesetzt werden als Komponente (B2) acyclische aliphatische Polyisocyanate mit freien oder blockierten Isocyanatgruppen bzw. deren durch Trimerisierung, Dimerisierung, Urethan-, Biuret-, und/oder Allophanatbildung abgeleiteten Polyisocyanate mit freien oder blockierten Isocyanatgruppen, die mindestens eine Struktureinheit (I) der Formel (I) und mindestens eine Struktureinheit der Formel (II) aufweisen.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die erfindungsgemäß bevorzugt eingesetzten, mit den Struktureinheiten (I) und/oder (II) funktionalisierten Komponenten (B2) werden insbesondere durch Umsetzung von acyclischen aliphatischen Polyisocyanaten bzw. deren durch Trimerisierung, Dimerisierung, Urethan-, Biuret-, Uretdion- und/oder Allophanatbildung abgeleiteten Polyisocyanaten mit mindestens einer Verbindung der Formel (Ia)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"_{y}(OR')₃-_{y})ₘ (IIa),

erhalten, wobei die Substituenten die oben genannte Bedeutung haben.

Die erfindungsgemäß besonders bevorzugt eingesetzten, mit den Struktureinheiten (I) und (II) funktionalisierten Komponenten (B2) werden besonders bevorzugt durch Umsetzung von
acyclischen aliphatischen Polyisocyanaten bzw. deren durch Trimerisierung, Dimerisierung, Urethan-, Biuret-, Uretdion und/oder Allophanatbildung abgeleiteten Polyisocyanaten
mit mindestens einer Verbindung der Formel (Ia) und mit mindestens einer Verbindung der Formel (IIa)
erhalten, wobei die Substituenten die oben genannte Bedeutung haben.

Bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Bevorzugte Verbindungen (Ia) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (Ia) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Bevorzugt sind in der Komponente (B2) zwischen 10 und 90 mol-%, besonders bevorzugt zwischen 20 und 80 mol-% und ganz besonders bevorzugt zwischen 30 und 70 mol-%, der ursprünglich vorhandenen Isocyanatgruppen zu Struktureinheiten (I) und/oder (II), bevorzugt zu Struktureinheiten (I) und (II), umgesetzt worden.

### Die cycloaliphatische Polyisocyanat-Komponente (B1)

Es ist außerdem besonders bevorzugt, dass die transparenten Beschichtungsmittelzusammensetzungen mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper enthalten.

Die als Grundkörper für die erfindungsgemäß eingesetzten Polyisocyanatgruppenhaltigen Verbindungen (B1) eingesetzten cycloaliphatischen Polyisocyanate sind bevorzugt an sich bekannte substituierte oder unsubstituierte cycloaliphatische Polyisocyanate. Beispiele für bevorzugte Polyisocyanate (B1) sind Isophorondiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydro-phenylen-1,4-diisocyanat, Perhydrodiphenylmethan-2,4'-diisocyanat, 4,4'-Methylendicyclohexyldiisocyanat (z.B. Desmodur ® W der Fa. Bayer AG) und Mischungen der vorgenannten Polyisocyanate.

Weiterhin bevorzugte Polyisocyanatgrundkörper für die Komponente (B1) sind die durch Trimerisierung, Dimerisierung, Urethan-, Biuret-, Uretdion- und/oder Allophanatbildung von einem solchen cycloaliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform der Erfindung sind die Polyisocyanatgrundkörper für die Komponente (B1) Polyisocyanat-Präpolymerisate mit Urethan-Struktureinheiten, welche durch Umsetzung von Polyolen mit einem stöchiometrischen Überschuss an vorgenannten cycloaliphatischen Polyisocyanaten erhalten werden. Solche Polyisocyanat-Präpolymere sind beispielsweise in US-A-4, 598,131 beschrieben.

Besonders bevorzugte cycloaliphatische Polyisocyanate (B1) sind Isophorondiisocyanat und 4,4'-Methylendicyclohexyldiisocyanat und/oder deren Biuret-Dimere und/oder deren Allophanat-Dimere und/oder deren Isocyanurat-Trimere.

Die als Komponente (B1) eingesetzten cycloaliphatischen Polyisocyanate bzw. deren durch Trimerisierung, Dimerisierung, Urethan-, Biuret- Uretdion- und/oder Allophanatbildung abgeleiteten Polyisocyanate können zusätzlich noch mindestens eine Struktureinheit (I) der Formel (I) und/oder mindestens eine Struktureinheit der Formel (II) enthalten.

Die mit den Struktureinheiten (I) und/oder (II) funktionalisierten Komponenten (B1) werden bevorzugt durch Umsetzung von cycloaliphatischen Polyisocyanaten bzw. deren durch Trimerisierung, Dimerisierung, Urethan-, Biuret-, Uretdion- und/oder Allophanatbildung abgeleiteten Polyisocyanate mit mindestens einer Verbindung der Formel (Ia)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"_{y}(OR')_{3-y})ₘ (IIa),

erhalten, wobei die Substituenten die oben genannte Bedeutung haben.

Bevorzugt sind in der Komponente (B1) 0 bis 34 mol-%, bevorzugt weniger als 5,0 mol-%, besonders bevorzugt weniger als 2,5 mol-%, und ganz besonders bevorzugt keine der ursprünglich vorhandenen Isocyanatgruppen zu Struktureinheiten (I) und/oder zu Struktureinheiten (II) umgesetzt worden.

Es ist weiterhin besonders bevorzugt, dass die Mischung der Komponenten (B1) plus (B2) sowohl Struktureinheiten (I) als auch Struktureinheiten (II) aufweist. Falls also die Komponente (B1) nur Struktureinheiten (I), aber keine Struktureinheiten (II) enthält, dann enthält die Komponente (B2) zwingend Struktureinheiten (II) sowie ggf. zusätzlich noch Struktureinheiten (I). Falls die Komponente (B1) nur Struktureinheiten (II), aber keine Struktureinheiten (I) enthält, dann enthält die Komponente (B2) zwingend Struktureinheiten (I) sowie ggf. zusätzlich noch Struktureinheiten (II).

Falls also die Komponente (B2) nur Struktureinheiten (I), aber keine Struktureinheiten (II) enthält, dann enthält die Komponente (B1) zwingend Struktureinheiten (II) sowie ggf. zusätzlich noch Struktureinheiten (I). Falls die Komponente (B2) nur Struktureinheiten (II), aber keine Struktureinheiten (I) enthält, dann enthält die Komponente (B1) zwingend Struktureinheiten (I) sowie ggf. zusätzlich noch Struktureinheiten (II).

Bevorzugte Beschichtungsmittelzusammensetzungen werden erhalten, wenn der Gesamtgehalt an Struktureinheiten (I) in der Mischung aus Komponente (B1) plus Komponente (B2) zwischen 3 und 90 mol-%, bevorzugt zwischen 5 und 70 mol-%, besonders bevorzugt zwischen 10 und 50 mol-%, ganz besonders bevorzugt zwischen 10 und 40 mol-% jeweils bezogen auf die Gesamtheit der Struktureinheiten (I) plus (II), und der Gesamtgehalt an Struktureinheiten (II) in der Mischung aus Komponente (B1) plus Komponente (B2) zwischen 97 und 10 mol-%, bevorzugt zwischen 95 und 30 mol-%, besonders bevorzugt zwischen 90 und 50 mol-% und ganz besonders bevorzugt zwischen 90 und 60 mol-%, jeweils bezogen auf die Gesamtheit der Struktureinheiten (I) plus (II), liegt.

Bevorzugt sind in der Mischung der Polyisocyanat-Komponente (B1) plus der Polyisocyanat-Komponente (B2) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in (B1) plus (B2) vorhandenen Isocyanatgruppen zu Struktureinheiten (I) und/oder (II), bevorzugt zu Struktureinheiten (I) und (II), umgesetzt worden.

Die Komponente (B1) wird bevorzugt in einer solchen Menge eingesetzt, dass der Bindemittelanteil des isocyanatgruppenhaltigen Grundkörpers der Komponente (B1) zwischen 5 und 45 Gew.%, bevorzugt zwischen10 und 40 Gew.-% und besonders bevorzugt zwischen 15 und 35 Gew.-% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2).

Besonders bevorzugt eingesetzte Beschichtungsmittelzusammensetzungen werden erhalten, wenn in der Mischung aus Komponente (B1) plus Komponente (B2)
der Gesamtgehalt an Struktureinheiten (I) zwischen 10 und 50 mol-% und der Gesamtgehalt an Struktureinheiten (II) zwischen 90 und 50 mol-%, jeweils bezogen auf die Gesamtheit der Struktureinheiten (I) plus (II), liegt und
zwischen 25 und weniger als 50 mol-%, der ursprünglich in (B1) plus (B2) vorhandenen Isocyanatgruppen zu Struktureinheiten (I) und(II) umgesetzt worden sind
und die Komponente (B1) in einer solchen Menge eingesetzt wird, dass der Bindemittelanteil des isocyanatgruppenhaltigen Grundkörpers der Komponente (B1) zwischen 15 und 35 Gew.-% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2).

In einer weiteren Ausführungsform der Erfindung weist die Polyhydroxylgruppen-haltige Verbindung (A) neben den Hydroxylgruppen Struktureinheiten der Formel (I) und/oder der Formel (II) auf.

Struktureinheiten der Formel (I) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (Ia) eingeführt, wobei die Substituenten die obengenannte Bedeutung haben. Struktureinheiten der Formel (II) können analog in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa) eingeführt werden, wobei die Substituenten die obengenannte Bedeutung haben. Zur Umsetzung des Polyols mit der Verbindung (Ia) und/oder (IIa) weist dieses entsprechend weitere funktionelle Gruppen auf, welche mit der sekundären Aminogruppe der Verbindung (Ia) bzw. (IIa) reagieren, wie insbesondere Säure- oder Epoxygruppen.

Monomerbausteine, die die Strukturelemente (I) und/oder (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (Ia) und/oder (IIa).

Geeignete Polyhydroxylgruppen-haltige Verbindungen (A) mit Struktureinheiten der Formel (I) und/oder der Formel (II) sind auch in der WO 08/74489, Seite 21, Zeile 21, bis Seite 23, Zeile 18 beschrieben.

### Katalysator (D)

Die erfindungsgemäß eingesetzten transparenten Beschichtungsmittelzusammensetzungen enthalten bevorzugt mindestens einen Katalysator (D) für die Vernetzung der Silangruppen. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittelzusammensetzungen führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt.

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. 1,4 Diazabicyclo [2.2.2] octan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäß eingesetzten transparenten Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt.

### Das Rheologiehilfsmittel (R) auf Basis pyrogener Kieselsäure

Es ist erfindungswesentlich, dass die erfindungsgemäß eingesetzte transparente Beschichtungsmittelzusammensetzung mindestens ein Rheologiehilfsmittel (R) auf Basis pyrogener Kieselsäure enthält.

Die Rheologiehilfsmittel (R) auf der Basis pyrogener Kieselsäuren weisen in der Regel eine kettenförmige Struktur auf und sind Agglomerate bzw. Aggregate von Siliciumdioxid-Primärteilchen. Diese Rheologiehilfsmittel werden insbesondere durch Flammenhydrolyse von Siliciumhalogenverbindungen erhalten. Derartige Rheologiehilfsmittel sind im Handel beispielsweise unter der Bezeichnung Aerosil® der Firma Evonik Degussa erhältlich.

Wie dem Fachmann bekannt ist, lassen sich dabei durch geeignete Reaktionsbedingungen bei der Flammhydrolyse und Oberflächenmodifikationen der Siliciumdioxid-Primärteilchen die Kenngrößen und damit auch die Eigenschaften der pyrogenen Kieselsäureteilchen gezielt variieren.

So spielt beispielsweise die Primärteilchengröße der Siliciumdioxid-Teilchen eine Rolle, da im Allgemeinen mit zunehmender Primärteilchengröße die Tendenz zur Agglomeratbildung abnimmt. Außerdem bedingt eine kleine Primärteilchengröße naturgemäß eine große spezifische Oberfläche.

Ferner unterscheidet man insbesondere zwischen Rheologiehilfsmitteln (R1) auf der Basis hydrophiler Kieselsäuren und Rheologiehilfsmitteln (R2) auf der Basis hydrophober Kieselsäuren. In der Regel haben dabei Rheologiehilfsmitteln (R1) auf der Basis hydrophiler Kieselsäuren einen größeren Effekt auf die Rheologie der Beschichtungsmittelzusammensetzung.

Erfindungsgemäß kann als Rheologiehilfsmittel (R) entweder mindestens ein Rheologiehilfsmittel (R1) auf der Basis hydrophiler Kieselsäuren oder mindestens ein Rheologiehilfsmittel (R2) auf der Basis hydrophober Kieselsäuren oder eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt werden.

Die mittels Flammenhydrolyse hergestellte pyrogene Kieselsäure weist an ihrer Oberfläche verschiedene funktionelle Gruppen, insbesondere Silanolgruppen und Siloxangruppen, auf. Sie ist daher als solches hydrophil und kann ohne weitere Modifizierung seiner Oberfläche als Rheologiehilfsmittel (R1) eingesetzt werden, d.h. diese Rheologiehilfsmittel (R1) bestehen bevorzugt aus pyrogener Kieselsäure.

Es können auch pyrogene Kieselsäuren, deren Oberfläche mit monomeren oder oligomeren Verbindungen modifiziert ist, in den Beschichtungsmitteln eingesetzt werden. Eine Oberflächenmodifizierung erfolgt üblicherweise durch Anbindung der an der Kieselsäureoberfläche befindlichen Gruppen, wie beispielsweise Silanolgruppen, an monomere oder oligomere Verbindungen. Diese monomeren oder oligomeren Verbindungen enthalten daher zumindest eine gegenüber den an der Teilchenoberfläche befindlichen Gruppen affine Gruppe. Die Anbindung kann beispielsweise durch kovalente Bindung, ionische Anbindung oder Physisorption erfolgen. Der nicht zur Anbindung an die Kieselsäurepartikeloberfläche benötigte Teil der monomeren oder oligomeren Verbindungen ragt vorzugsweise ganz oder teilweise in das die Partikel umgebende Medium.

Die zur Oberflächenmodifizierung verwendeten monomeren oder oligomeren Verbindungen können neben der zur Anbindung an die Oberfläche der Kieselsäurepartikel erforderlichen Gruppe noch weitere funktionelle Gruppen enthalten, die beispielsweise in der Lage sind, mit der Bindemittelkomponente (A) zu reagieren. Eine derartige Oberflächenmodifikation gelingt beispielsweise durch Zugabe hydrolysierbarer Silane, die noch mindestens eine weitere funktionelle Gruppe tragen, zu den Kieselsäurepartikeln.

Beispiele zur Oberflächenmodifizierung der Partikel geeigneter hydrolysierbarer Silane umfassen solche Silane, die als gegenüber dem Bindemittel (A) und/oder den Vernetzungsmitteln (B1) und/oder (B2) reaktive Gruppe eine Glycidylgruppe, eine Aminogruppe, eine Hydroxylgruppe oder eine Mercaptogruppe enthalten.

Bevorzugt werden erfindungsgemäß jedoch zur Oberflächenmodifizierung monomere oder oligomere Verbindungen eingesetzt, die neben der gegenüber Silanolgruppen reaktiven Gruppe einen oder mehrere hydrophobe Reste aufweisen und so mit einer Hydrophobierung der Kieselsäurepartikel verbunden sind und daher zur Herstellung der Rheologiehilfsmitteln (R2) auf der Basis hydrophober Kieselsäuren dienen. Bevorzugt werden zur Modifizierung der Kieselsäure organofunktionelle Siliciumverbindungen mit mindestens einer Alkylgruppe mit 1 bis 50 C-Atomen, insbesondere mit 1 bis 10 C-Atomen, und mit mindestens einer hydrolysierbaren Gruppe bzw. mit mindestens einer OH- bzw. NH-Gruppe eingesetzt. Beispiele für solche Verbindungen sind Alkylalkoxysilane, insbesondere Dialkyldialkoxysilane und Alkyltrialkoxysilane, Alkylhalogensilane, insbesondere Alkylchlorsilane, bevorzugt Trialkylchlorsilane und Dialkyldichlorsilane, Alkylpolysiloxane, Dialkylpolysiloxane und Alkyldisilazane u.Ä

Als Rheologiehilfsmittel (R2) auf der Basis hydrophober Kieselsäuren werden dabei besonders bevorzugt silanisierte, pyrogen hergestellten Kieselsäuren eingesetzt, die auf der Oberfläche fixierte Trimethylsilylgruppen und/oder Dimethylsilylgruppen und/der Monomethylsilylgruppen aufweisen. Diese besonders bevorzugt eingesetzten Rheologiehilfsmittel (R2) können beispielsweise dadurch hergestellt werden, dass man ein pyrogen hergestelltes Siliciumdioxid mit Trimethylchlorsilan und/oder Dimethyldichlorsilan und/oder Monomethyltrichlorsilan oberflächenmodifiziert.

Prinzipiell nimmt die rheologiesteuernde Wirkung sowohl der Rheologiehilfsmittel (R1) auf Basis hydrophiler Kieselsäure als auch die rheologiesteuernde Wirkung der Rheologiehilfsmittel (R2) auf Basis hydrophober Kieselsäure mit abnehmender Primärteilchengröße zu. Sowohl die erfindungsgemäß eingesetzten Rheologiehilfsmittel (R1) auf der Basis hydrophiler Kieselsäuren als auch die Rheologiehilfsmittel (R2) auf der Basis hydrophober Kieselsäuren weisen daher üblicherweise eine Primärteilchengröße von <50 nm auf.

In den transparenten Beschichtungsmittelzusammensetzungen werden daher bevorzugt sowohl Rheologiehilfsmittel (R1) auf Basis hydrophiler Kieselsäure als auch Rheologiehilfsmittel (R2) auf Basis hydrophober Kieselsäure mit einer inneren Oberfläche nach BET von mehr als 100 m²/g, insbesondere mit einer inneren Oberfläche nach BET von mehr als 200 m²/g eingesetzt.

Beispiele für geeignete Rheologiehilfsmitteln (R1) auf der Basis hydrophiler Kieselsäuren sind auch die im Handel erhältlichen üblichen und bekannten Produkte, die beispielsweise von der Firma Degussa Evonik unter der Marke Aerosil® 380, Aerosil® 300, Aerosil® 200, Aerosil® 150 und Aerosil® 130 oder von der Firma Wacker unter der Typenbezeichnung T 40 vertrieben werden, wobei insbesondere Aerosil® 380 eingesetzt wird.

Beispiele für Rheologiehilfsmitteln (R2) auf der Basis hydrophober Kieselsäuren sind übliche und bekannte Produkte, wie beispielsweise von der Firma Degussa Evonik unter der Marke Aerosil®, insbesondere Aerosil® R816, R711, 8200, R106, R972 , R974, R805, R812 oder R812S, oder der Firma Wacker unter der Marke oder Typenbezeichnung HDK, insbesondere HDK H 15, H 18, H 20, H 30 oder 2000, vertrieben.

Die Rheologiehilfsmittel (R) bzw. (R1) bzw. (R2) werden in dem Beschichtungsmittelzusammensetzungen vorzugsweise in zumindest einem Teil des Bindemittels (A) oder - falls mehrere verschiedene Bindemittel (A) in dem erfindungsgemäßen Beschichtungsmittelzusammensetzungen eingesetzt werden - in zumindest einem Teil mindestens eines Bindemittels (A) dispergiert eingesetzt.

Das Rheologiehilfsmittel (R) wird vorzugsweise in Anteilen von 0,01 bis 10 Gew.-%, besonders bevorzugt in Anteilen von 0,5 bis 5,0 Gew.-%, bezogen auf den Bindemittelanteil der erfindungsgemäßen Beschichtungsmittelzusammensetzung, eingesetzt. Werden zwei oder mehrere verschiedene Rheologiehilfsmittel (R) eingesetzt, so liegt die Gesamtmenge all dieser Rheologiehilfsmittel (R) zwischen 0,01 und 10 Gew.-%, besonders bevorzugt zwischen 0,5 und 5,0 Gew.-%, bezogen auf den Bindemittelanteil der erfindungsgemäßen Beschichtungsmittelzusammensetzung. Wird als Rheologiehilfsmittel (R) eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt, so liegt die Gesamtmenge dieser Rheologiehilfsmittel (R1) plus (R2) zwischen 0,01 und 10 Gew.-%, besonders bevorzugt zwischen 0,5 und 5,0 Gew.-%, bezogen auf den Bindemittelanteil der erfindungsgemäßen Beschichtungsmittelzusammensetzung.

### Die Kombination der Komponenten (A), (B1), (B2), ggf. (C), (D) und (R) sowie weitere Komponenten der transparenten Beschichtungsmittelzusammensetzungen

Handelt es sich um einkomponentige Beschichtungsmittelzusammensetzungen, so werden Polyisocyanatgruppen-haltige Verbindungen (B1) und (B2) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B1) und (B2) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltigen Verbindungen (B1) und (B2) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxylgruppen-haltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Bevorzugt werden erfindungsgemäß Beschichtungsmittelzusammensetzungen eingesetzt, die von 20 bis 79,98 Gew.-%, bevorzugt von 30 bis 69,4 Gew.-%, jeweils bezogen auf den Bindemittelanteil der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Bevorzugt werden erfindungsgemäß Beschichtungsmittelzusammensetzungen eingesetzt, die von 79,98 bis 20 Gew.-%, bevorzugt von 69,4 bis 30 Gew.-%, jeweils bezogen auf den Bindemittelanteil der Beschichtungsmittelzusammensetzung, der Mischung aus mindestens einer Polyisocyanat-Komponente (B1) plus mindestens einer Polyisocyanat-Komponente (B2) enthalten.

Bevorzugt enthalten die Beschichtungsmittelzusammensetzungen die Verbindungen (C) in einem Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung.

Die Gewichtsanteile des Polyols (A) und ggf. (C) und der Polyisocyanate (B1) und (B2) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B1) plus (B2) zwischen 1:0,5 und 1:1,5, bevorzugt zwischen 1:0,8 und 1:1,2 besonders bevorzugt zwischen 1:0,9 und 1:1,1, liegt.

Die Polyhydroxylgruppen-haltigen Komponente (A), die Polyhydroxylkomponente (C) und/oder die Polyisocyanat-Komponente (B1) und/oder (B2) können in einem geeigneten Lösemittel vorliegen.

Als Lösemittel (L) für die erfindungsgemäßen Beschichtungsmittelzusammensetzungen sind insbesondere solche geeignet, die im Beschichtungsmittel chemisch inert gegenüber den Verbindungen (A), (B1), (B2) und ggf. (C) sind und die auch bei der Härtung des Beschichtungsmittels nicht mit (A), ggf. (C), (B1) und (B2) reagieren. Beispiele für solche Lösemittel sind aliphatische und/oder aromatische Kohlenwasserstoffe wie Toluol, Xylol, Solventnaphta, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Neben den Verbindungen (A), (B1), (B2) und ggf. (C) können noch weitere Bindemittel (E) eingesetzt werden, welche vorzugsweise mit den Hydroxylgruppen des Poly(meth)acrylates (A) und/oder mit den freien Isocyanatgruppen der Verbindung (B) und/oder mit den Alkoxysilylgruppen der Verbindungen (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf den Bindemittelanteil der erfindungsgemäßen Beschichtungsmittelzusammensetzung, eingesetzt.

Die erfindungsgemäße Beschichtungsmittelzusammensetzung enthält außerdem das Rheologiehilfsmittel (R) in einer Gesamtmenge von 0,01 bis 10 Gew.-%, besonders bevorzugt in einer Gesamtmenge von 0,5 bis 5,0 Gew.-%, bezogen auf den Bindemittelanteil der erfindungsgemäßen Beschichtungsmittelzusammensetzung.

Darüber hinaus kann die erfindungsgemäße Bindemittelmischung bzw. die erfindungsgemäße Beschichtungsmittelzusammensetzung mindestens ein übliches und bekanntes, von den Komponenten (A), (B), (C), (D) und (R) verschiedenes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Hierbei sind Beschichtungsmittelzusammensetzungen bevorzugt, die weniger als 7,5 Gew.-%, bevorzugt weniger als 5,0 Gew.-%, besonders bevorzugt weniger als 1,0 Gew.-%, jeweils bezogen auf den Bindemittelanteil der erfindungsgemäßen Beschichtungsmittelzusammensetzung und bezogen auf den Bindemittelanteil des Rheologiehilfsmittels auf Harnstoffbasis, und insbesondere gar kein Rheologiehilfsmittel auf Harnstoff-basis enthalten.

Besonders bevorzugt sind Beschichtungsmittelzusammensetzungen, die 30 bis 69,4 Gew.-%, bezogen auf den Bindemittelanteil der Beschichtungsmittelzusammensetzung, mindestens eines Polyhydroxylgruppen-haltigen Polyacrylates (A) und/oder mindestens eines Polyhydroxylgruppen-haltigen Polymethacrylates (A),
69,4 bis 30 Gew.-%, bezogen auf den Bindemittelanteil der Beschichtungsmittelzusammensetzung, der Polyisocyanatgruppen-haltigen Verbindungen (B1) plus (B2),
0 bis 10 Gew.-%, bezogen auf den Bindemittelanteil der Beschichtungsmittelzusammensetzung, der hydroxylgruppenhaltigen Komponente (C) 0,1 bis 10 Gew.-%, bezogen auf den Bindemittelanteil der erfindungsgemäßen Beschichtungsmittelzusammensetzung, mindestens eines Katalysators (D),
0,5 bis 5 Gew.-%, bezogen auf den Bindemittelanteil der erfindungsgemäßen Beschichtungsmittelzusammensetzung, mindestens eines Rheologiehilfsmittels (R) auf Basis pyrogene Kieselsäure,
0 bis 15 Gew.-%, bezogen auf den Bindemittelanteil der Beschichtungsmittelzusammensetzung, eines oder mehrerer Aminoplastharze und/oder eines oder mehrerer Tris(Alkoxycarbonylamino)Triazine (E) und
0 bis 20 Gew.-%, bezogen auf den Bindemittelanteil der Beschichtungsmittelzusammensetzung, mindestens eines üblichen und bekannten Lackadditivs (F)
enthalten.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B1) bzw. (B2) bzw. (C) der Beschichtungsmittelzusammensetzungen wird analog dadurch bestimmt, dass eine kleine Probe (P) der jeweiligen Komponente (A) bzw. (B1) bzw. (B2) bzw. (C) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

In einer weiteren Ausführungsform der Erfindung kann die erfindungsgemäß eingesetzte Bindemittelmischung bzw. die erfindungsgemäß eingesetzte transparente Beschichtungsmittelzusammensetzung noch Pigmente und/oder transparente Füllstoffe enthalten und zur Herstellung pigmentierter, transparenter Topcoats dienen. Die dafür eingesetzten Pigmente und/oder Füllstoffe sind dem Fachmann bekannt. Die Pigmente werden üblicherweise in einer solchen Menge eingesetzt, dass dasPigment-zu-Bindemittel-Verhältnis zwischen 0,05:1 und 1,5:1 liegt, jeweils bezogen auf den Bindemittelanteil derBeschichtungsmittelzusammensetzung.

### Die effekt- und/oder farbgebende Pigmente enthaltenden Basislackbeschichtungszusammensetzungen (BL1) und (BL2)

Die Basislackbeschichtungszusammensetzungen (BL1) und (BL2) enthalten mindestens ein Pigment. Vorzugsweise wird das Pigment aus der Gruppe, bestehend aus organischen und anorganischen, farbgebenden, optisch effektgebenden, farb- und optisch effektgebenden, fluoreszierenden und phosphoreszierenden Pigmenten, insbesondere aus der Gruppe, bestehend aus organischen und anorganischen, farbgebenden, optisch effektgebenden, farb- und optisch effektgebenden Pigmenten, ausgewählt.

Beispiele geeigneter Effektpigmente, die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, "Effektpigmente" und Seiten 380 und 381 "Metalloxid-Glimmer-Pigmente" bis "Metallpigmente", und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Stichworte Seiten 180 und 181, "Eisenblau-Pigmente" bis "Eisenoxidschwarz", Seiten 451 bis 453 "Pigmente" bis "Pigmentvolumenkonzentration", Seite 563 "Thioindigo-Pigmente", Seite 567 "Titandioxid-Pigmente", Seiten 400 und 467, "Natürlich vorkommende Pigmente", Seite 459 "Polycyclische Pigmente", Seite 52, "Azomethin-Pigmente", "Azopigmente" und Seite 379, "Metallkomplex-Pigmente", verwiesen.

Beispiele für fluoreszierende und phosphoreszierende Pigmente (Tagesleuchtpigmente) sind Bis(azomethin)-Pigmente.

Darüber hinaus können die Basislackbeschichtungszusammensetzungen (BL1) und (BL2) funktionelle Pigmente, wie magnetisch abschirmende, elektrisch leitfähige, korrosionshemmende, UV-Strahlung absorbierende oder steinschlagschützende Pigmente, enthalten.

Beispiele für magnetisch abschirmende Pigmente sind Pigmente auf der Basis von Eisenoxiden oder Chromdioxid. Beispiele für geeignete elektrisch leitfähige Pigmente sind Titandioxid/Zinnoxid-Pigmente. Beispiele geeigneter korrosionshemmender Pigmente sind Bleisilikate, Zinkphosphate oder Zinkborate. Beispiel für ein geeignetes steinschlagschützendes Pigment ist Talkum.

Vorzugsweise werden die UV-Strahlung absorbierenden Pigmente aus der Gruppe, bestehend aus Titandioxid-Pigmenten und Ruß-Pigmenten, ausgewählt. Bevorzugt werden mindestens ein Titandioxid-Pigment und mindestens ein Ruß-Pigment verwendet.

Der Gehalt an funktionellen Pigmenten in den Basislackbeschichtungszusammensetzungen (BL1) und (BL2) kann sehr breit variieren und richtet sich nach den Erfordernissen des Einzelfalls. Vorzugsweise liegt der Gehalt an funktionellem Pigment, bezogen auf den Festkörper (bestimmt wie bei der transparenten Beschichtungsmittelzusammensetzung für die Bestimmung des Bindemittelanteils beschrieben) der Basislackbeschichtungszusammensetzung, bei 0,001 bis 6 Gew.-%, besonders bevorzugt 0,01 bis 5 Gew.-%, insbesondere 0,01 bis 4 Gew.-%.

Der Gehalt an Pigmenten in der Basislackbeschichtungszusammensetzung kann sehr breit variieren und richtet sich in erster Linie nach der Intensität der Effekte, insbesondere der optischen Effekte, und/oder dem Buntton, der oder die eingestellt werden soll oder sollen. Vorzugsweise liegt der Pigmentgehalt im Falle von Unilacken, jeweils bezogen auf den Festkörper (bestimmt wie bei der transparenten Beschichtungsmittelzusammensetzung für die Bestimmung des Bindemittelanteils beschrieben) der Basislackbeschichtungszusammensetzung, bei 0,5 bis 70, bevorzugt bei 1,0 bis 60 Gew.-%. Vorzugsweise liegt der Pigmentgehalt im Falle von Metallic- bzw. Effektlacken, jeweils bezogen auf den Festkörper (bestimmt wie bei der transparenten Beschichtungsmittelzusammensetzung für die Bestimmung des Bindemittelanteils beschrieben) der Basislackbeschichtungszusammensetzung, bei 0,5 bis 40, bevorzugt bei 0,5 bis 35, besonders bevorzugt bei 1 bis 30 Gew.-%.

Besonders bevorzugt enthält die erste Basislackbeschichtungszusammensetzung (BL1) farbgebende Pigmente und die zweite Basislackbeschichtungszusammensetzung (BL2) effektgebende Pigmente.

Die erfindungsgemäß eingesetzten Basislackbeschichtungszusammensetzungen (BL1) und (BL2) können unter Verwendung sowohl wässriger als auch lösemittelhaltiger Beschichtungsmittel (B) hergestellt worden sein, die im Allgemeinen physikalisch oder thermisch und/oder mit aktinischer Strahlung härtbar sind. Vorzugsweise handelt es sich bei den Basislackbeschichtungszusammensetzungen (BL1) und (BL2) um wässrige Basislackbeschichtungszusammensetzungen.
Die Basislackbeschichtungszusammensetzungen (BL1) und (BL2) enthalten üblicherweise
ein oder mehrere Lösemittel und/oder Wasser
ein oder mehrere Bindemittel, bevorzugt ein oder mehrere Polyurethanharze und/oder Acrylatharze und/oder Polyesterharze, besonders bevorzugt mindestens ein Polyurethanharz,
ggf. mindestens ein Vernetzungsmittel,
ein oder mehrere Pigmente,
ggf. UV-Absorber sowie
ggf. ein oder mehrere übliche Hilfs- und Zusatzstoffe.

Als Bindemittel geeignet sind dabei die in Basislacken im Bereich der Automobilindustrie üblicherweise eingesetzten Polyurethanharze, Acrylatharze und Polyesterharze, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für das erfindungsgemäße Verfahren gesteuert wird.

Bevorzugt eingesetzt werden Polyurethanharze, ggf. in Kombination mit einem oder mehreren Polyacrylatharzen und/oder mit einem oder mehreren Polyesterharzen.

Die Polyurethanharze werden in den Fachmann bekannter Weise erhalten durch Umsetzung
- mindestens eines Polyols, ausgewählt aus der Gruppe, bestehend aus Polyester- und Polyetherpolyolen, bevorzugt mit einem zahlenmittleren Molekulargewicht von 400 bis 5.000, und
- mindestens eines Polyisocyanates sowie
- gegebenenfalls mindestens einer Verbindung, enthaltend mindestens eine isocyanatreaktive funktionelle Gruppe und mindestens eine (potentiell) anionische Gruppe im Molekül
- gegebenenfalls mindestens einer weiteren Verbindung, enthaltend mindestens eine isocyanatreaktive funktionelle Gruppe und
- gegebenenfalls mindestens einer Verbindung eines zahlenmittleren Molekulargewichts von 60 bis 600 Dalton, enthaltend Hydroxyl- und/oder Aminogruppen im Molekül
und im Falle der für wässrige Beschichtungsmittel eingesetzten Polyurethanharze Neutralisation des resultierenden Reaktionsprodukts.

Derartige Polyurethanharze sind beispielsweise in der EP-B-228 003, der EP-B-574 417 und der WO2006/097201 beschrieben.

Zusammen oder anstelle der genannten Polyurethanharze sind als Bindemittel in den pigmentierten Beschichtungsmitteln auch sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Besonders bevorzugt werden als Bindemittel acrylierte Polyurethanharze mit seitenständigen und/oder endständigen Doppelbindungen, insbesondere mit seiten- und/oder endständigen Ethenylarylengruppen, eingesetzt. Geeignete acrylierte Polyurethanharze sowie daraus hergestellte Propfmischpolymerisate sind beispielsweise in der WO01/25307 Seite 5, Zeile 14, bis Seite 45, Zeile 4, und der EP-B-787 159, Seite 2, Zeile 27, bis Seite 7, Zeile 13, sowie der WO2006/097201, Seite 27, Zeile 11, bis Seite 28, Zeile 5, beschrieben.

Die beschriebenen Polyurethanharze können ggf. in Kombination mit einem oder mehreren Polyacrylatharzen und/oder mit einem oder mehreren Polyesterharzen eingesetzt werden.

Der Gehalt der Basislackbeschichtungszusammensetzungen an Bindemittel beträgt im Allgemeinen, jeweils bezogen auf den Festkörpergehalt des Beschichtungsmittels, 10 bis 99, bevorzugt 30 bis 90 Gew.- %.

Der Gehalt der Basislackbeschichtungszusammensetzungen an Vernetzungsmittel beträgt im Allgemeinen, jeweils bezogen auf den Festkörpergehalt des Beschichtungsmittels, 0 bis 55, bevorzugt 5 bis 40 Gew.- %.

Als ggf. eingesetztes Vernetzungsmittel enthalten die pigmentierten Beschichtungsmittel insbesondere freie Isocyanate oder blockierte Isocyanate und/oder Aminoplastharze.

Außer den vorstehend beschriebenen Pigmenten können die Basislackbeschichtungszusammensetzungen übliche und bekannte Hilfs- und Zusatzstoffe, wie organische und anorganische, transparente und deckende Füllstoffe, und Nanopartikel sowie Polymermikroteilchen und weitere übliche Hilfs- und Zusatzstoffe in üblichen Mengen, bevorzugt 0 bis 40 Gew.-%, bezogen auf das Beschichtungsmittel, enthalten.

Im Falle einer mehrschichtigen pigmentierten Beschichtung kann dabei die erste Basislackschicht im Vergleich zu der nachfolgenden zweiten Basislackschicht noch weitere Additive, insbesondere Additive zur Erzielung von Füllereigenschaften, wie beispielsweise elastomere Teilchen, Talkum u.Ä enthalten.

### Die Grundierungsbeschichtungszusammensetzung (G)

Bestehen die Substrate aus Stahl und ähnlichen Metallen, werden übliche und bekannte Elektrotauchlackierungen als Grundierungen (G) verwendet. Die Elektrotauchlackierungen (G) werden in üblicher und bekannter Weise aus elektrophorethisch, insbesondere kathodisch abscheidbaren Elektrotauchlacken hergestellt. Die resultierenden Elektrotauchlackschichten (G) werden im Allgemeinen vor der Applikation der ersten Basislackbeschichtungszusammensetzung (BL1) gehärtet. Sie können aber auch lediglich getrocknet und dabei nicht oder nur partiell gehärtet werden, wonach sie gemeinsam mit den übrigen Schichten (BL1), ggf. (BL2) und (KL) gehärtet werden.

Bestehen die Substrate aus Aluminium, so werden durch anodische Oxidation erzeugte Aluminiumoxidschichten als Grundierungen (G) verwendet, die als solche nicht mehr weiter gehärtet werden müssen.

Bestehen die Substrate aus Kunststoffen, beispielsweise wie im Falle von Automobilanbauteilen, werden diese vorzugsweise mit einer üblichen und bekannten Hydrogrundierung (G) versehen, oder die Haftungseigenschaften ihrer Oberfläche werden mit Hilfe chemischer und/oder physikalischer Verfahren verbessert. Auch in diesen Fällen müssen die Grundierungen (G) im Allgemeinen nicht gehärtet werden.

Werden die erfindungsgemäßen Mehrschichtlackierungen zur Beschichtung anderer Substrate eingesetzt, werden die für die Grundierung dieser Substrate üblichen Beschichtungsmittel eingesetzt.

Die Elektrotauchlacke enthalten Bindemittel, die ionische oder in ionische Gruppen überführbare Substituenten sowie zur chemischen Vernetzung fähige Gruppen tragen. Die ionischen Gruppen können anionische oder in anionische Gruppen überführbare Gruppen, z.B. COOH-Gruppen, oder kationische Gruppen oder in kationische Gruppen überführbare Gruppen, z.B. Amino-, Ammonium-, quatäre Ammonium-, Phosphonium- und/oder Sulphonium-Gruppen sein. Bevorzugt werden Bindemittel mit basischen Gruppen, insbesondere stickstoffhaltige basische Gruppen eingesetzt. Diese Gruppen können quaternisiert vorliegen oder sie werden mit üblichen Neutralisationsmitteln, z.B. organischen Monocarbonsäuren, wie z.B. Ameisen-, Essig- oder Milchsäure, in ionische Gruppen überführt.

Geeignete anodisch abscheidbare Elektrotauchlacke sind bekannt und beispielsweise in der DE-A-28 24 418 beschrieben. Sie enthalten üblicherweise selbst- oder fremdvernetzende Bindemittel auf Basis von Polyestern, Epoxidharzen, Poly(meth)acrylaten, Maleinatölen oder Polybutadienölen, die anionische Gruppen, wie -COOH, -SO3H und/oder -PO3H2-Gruppen tragen, sowie übliche Vernetzer, wie z.B. Triazinharze, blockierte Polyisocyanate oder Vernetzer, die umesterungsfähige Gruppen tragen.

Geeignete kathodisch abscheidbare Elektrotauchlacke sind ebenfalls bekannt und beispielsweise in der EP-B 0241476, WO 91/09917, EP-B-0920 480, EP-B 0961 797, WO2003/068418 und WO2004/018580 beschrieben. Sie enthalten üblicherweise selbst- oder fremdvernetzende Bindemittel auf Basis von Polyestern, Epoxidharzen, Epoxidharzen mit endständigen Doppelbindungen oder OH-Gruppen, Poly(meth)acrylaten, Polyurethanharzen oder Polybutadienharzen, die kationische Gruppen, wie primäre, sekundäre oder tertiäre Aminogruppen, die mit einer organischen Säure neutralisiert sind, tragen, sowie übliche Vernetzer, wie z.B. Triazinharze, blockierte Polyisocyanate, Aminoplastharze, Polyepoxidverbindungen oder Vernetzer, die umesterungsfähige Gruppen oder Doppelbindungen tragen.

Bevorzugt werden die in der EP-B-0961 797 beschriebenen kathodisch abscheidbaren Elektrotauchlacke eingesetzt, die eine wässrige Bindemittel-Dispersion auf der Basis ammoniumgruppenhaltiger Epoxidharze enthalten, die erhältlich sind durch
Umsetzung eines oder mehrerer Diepoxidharze (a) mit einem oder mehreren Mono- und/oder Diphenolen (b) zu einem Zwischenprodukt (I), Umsetzung des Zwischenproduktes (I) mit einem oder mehreren Aminen zu einem Epoxid-Amin-Addukt (A),
anschließende oder gleichzeitige Umsetzung der sekundären Hydroxylgruppen, die bei der Umsetzung von (a) und (b) gebildet werden, mit den Epoxidgruppen des Epoxid-Amin-Adduktes (A),
Zusatz mindestens eines Vernetzungsmittels,
Neutralisation und
Dispergierung der erhaltenen Mischung in Wasser.

### Die Herstellung der erfindungsgemäßen Mehrschichtlackierungen

Die Substrate, auf die die erfindungsgemäße Mehrschichtlackierung aufgebracht wird, können aus den unterschiedlichsten Materialien und Kombinationen von Materialien aufgebaut sein. Vorzugsweise bestehen sie aus Metallen, Kunststoffen, Glas, Holz, Leder, Textil, Keramik oder Naturstein, bevorzugt aus Metallen, Kunststoffen und Glas, insbesondere aus Metallen und Kunststoffen.

Die erfindungsgemäße Mehrschichtlackierung ist insbesondere vorteilhaft bei Substraten mit rauer Oberfläche.

Die Applikation der erfindungsgemäß eingesetzten Beschichtungsmittelzusammensetzungen (BL1), ggf. (BL2) und (KL) kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel pneumatische Spritzapplikation, Airless-Spritzen, elektrostatische Spritzapplikation (ESTA), vorzugsweise mit Hochrotationsglocken, und gegebenenfalls verbunden mit Heißspritzapplikation, wie zum Beispiel Hot-Air-Heißspritzen, insbesondere pneumatische Spritzapplikation oder elektrostatische Spritzapplikation (ESTA), vorzugsweise mit Hochrotationsglocken.

Bevorzugt wird der bzw. die aufgebrachten Basislackbeschichtungszusammensetzungen zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die transparente Beschichtungsmittelzusammensetzung aufgebracht.

Die Aushärtung der applizierten Beschichtungsmittelzusammensetzungen kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Anschließend wird die Lackierung bevorzugt unter bei der Automobilserienlackierung angewandten Bedingungen bei Temperaturen von 20 bis 200°C , bevorzugt 40 bis 190°C und insbesondere 50 bis 180°C, während einer Zeit von 1 min bis zu 10 h, bevorzugt 2 min bis 5 h und insbesondere 3 min bis 3h, eingebrannt, wobei bei den für die Automobilreparaturlackierung und für die Lackierung von Kunststoffteilen sowie die Lackierung von Nutzfahrzeugen angewandten Temperaturen, die im Allgemeinen zwischen 20 und 80°C, insbesondere zwischen 20 und 60°C liegen, auch längere Härtzeiten zur Anwendung kommen können.

Die thermische Härtung der Beschichtungsmittelzusammensetzungen weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Die Basislackbeschichtungszusammensetzung (BL1) und die ggf. vorhandene Basislackbeschichtungszusammensetzung (BL2) werden bevorzugt mit einer solchen Naßfilmschichtdicke appliziert, dass nach der Härtung eine gemeinsame Trockenfilmschichtdicke (sogenannte Prozess-Schichtdicke) des Basislacks (BL1) und ggf. Basislacks (BL2) von insgesamt 15 bis 50 µm resultiert. Selbstverständlich kann bekanntermaßen die gemeinsame Trockenfilmschichtdicke in den Auslaufzonen oder schwer zugänglichen Zonen deutlich abweichen.

Die transparente Beschichtungsmittelzusammensetzung (KL) wird bevorzugt mit einer solchen Naßfilmschichtdicke appliziert wird, dass nach der Härtung eine Trockenfilmschichtdicke des Klarlacks (KL) von 20 bis 50 µm resultiert.

Die erfindungsgemäßen Mehrschichtlackierungen eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst, zur Beschichtung von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Bevorzugt werden die erfindungsgemäßen Mehrschichtlackierungen in der Automobilserien(OEM)lackierung, für die Autoreparaturlackierung und/oder für die Beschichtung von Automobilanbauteilen und/oder die Beschichtung von Nutzfahrzeugen und/oder die Beschichtung von Kunststoffteilen eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

### Beispiele

### Herstellbeispiel für das eingesetzte Härtersystem (B-1) (Silanisierungsgrad der Verbindung (B-1), bezogen auf NCO molar: 34 mol-%, molares Verhältnis der Struktureinheiten (I) zu den Struktureinheiten (II) = 50:50)

In einem Reaktionsgefäß werden 33,5 Gewichtsteile trimerisiertes Hexamethylen-1,6-diisocyanat (Desmodur® N3300, Firma Bayer Material Science AG, Leverkusen) und 28 Gewichtsteile Butylacetat vorgelegt. Unter Rückflusskühlung, Stickstoffüberschleierung und Rühren wird eine Mischung aus 7,0 Gewichtsteilen N-[3-(trimethoxysilyl)-propyl]-butylamin (Dynasylan® 1189, Firma EVONIK, Rheinfelden) und 10,0 Gewichtsteilen Bis -[3 trimethoxysilyl- propyl] amin (Dynasylan® 1124, Firma EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 6,1 Gew.-% erreicht hat. Das so erhaltene Gemisch weist einen theoretischen Festkörpergehalt von 64 Gew.-% auf.

### Herstellbeispiel für das eingesetzte Härtersystem (B-2) (molares Verhältnis der Struktureinheiten (I) zu den Struktureinheiten (II) in der Verbindung (B2-2) = 50:50, einem Silanisierungsgrad der Verbindung (B2-2) von 41 mol-% entsprechend einem Silanisierungsgrad bezogen auf die ursprünglich in der Verbindung (B1-2) plus der Verbindung (B2-2) vorhandenen Isocyanatgruppen von 34 mol-% und einem Bindemittelanteil des Polyisocyanatgrundkörpers der Komponente (B1-2) von 20 Gew.%, bezogen auf die Summe aus dem Bindemittelanteil des Polyisocyanatgrundkörpers der Komponente (B1-2) und dem Bindemittelanteil des Polyisocyanatgrundkörpers der Komponente (B2-2))

In einem Reaktionsgefäß werden 28 Gewichtsteile trimerisiertes Hexamethyl-1,6-diisocyanat (Desmodur® N3300, Firma Bayer Material Science AG, Leverkusen) und 24 Gewichtsteile Butylacetat vorgelegt. Unter Rückflusskühlung, Stickstoffüberschleierung und Rühren wird eine Mischung aus 7,0 Gewichtsteilen N-[3-(trimethoxysilyl)-propyl]-butylamin (Dynasylan® 1189, Firma EVONIK, Rheinfelden) und 10,0 Gewichtsteilen Bis -[3 trimethoxysilyl- propyl] amin (Dynasylan® 1124, EVONIK, Rheinfelden) so zugetropft, dass eine Temperatur von 50-60°C nicht überschritten wird. Das Reaktionsgemisch wird gerührt bis der mittels Titration ermittelte NCO-Wert den theoretisch errechneten NCO-Wert von 5,2 Gew.-% erreicht hat. Anschließend werden 10 Gewichtsteile trimerisiertes Isophorondiisocyanat (Desmodur® Z4470, Firma Bayer Material Science AG, Leverkusen, 70%ig in Solventnaphta) zugegeben. Das so erhaltene Gemisch weist einen NCO-Wert von 6,1 Gew.-% auf. Das so erhaltene Gemisch weist einen theoretischen Festkörpergehalt von 65 Gew.-% auf.

### Herstellbeispiel des Polymethacrylates (A1):

In einem, mittels Ölumlaufthermostat beheizbaren, doppelwandigen 4-I Edelstahlkessel, ausgestattet mit Thermometer, Ankerrührer, 2 Tropftrichtern und Rückflusskühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 1 angegebenen Feststoffgehalt eingestellt.

**Tabelle 1: Zusammensetzung des Polymethacrylates (A1) in Gew.-Teilen und Kennzahlen des Polymethacrylates (A1) (Säurezahl experimentell bestimmt, OHZ theoretisch berechnet, Tg theoretisch berechnet)**

| Komponente | Gew.-Tle. |
|---|---|
| Styrol | 8,0 |
| n-Butyl methacrylat | 8,0 |
| Acrylsäure | 0,6 |
| 4-Hydroxybutylacrylat | 12,0 |
| 2-Hydroxyethylacrylat | 12,0 |
| n-Butylacrylat | 19,0 |
| Festkörper 1 h 150°C | 65% |
| Säurezahl (gemessen) [mg KOH/g] | 8-12 |
| OH-Zahl berechnet [mg KOH/g] | 175 |
| Tg (FOX) [°C] | -27 |

### Herstellung des erfindungsgemäßen Rheologiehilfsmittels (R1) auf Basis hydrophiler Kieselsäuren

Die beiden ersten Positionen in Tabelle 2 (Bindemittel (A1) und Lösemittel werden in der angegebenen Reihenfolge in einen Dissolver zugegeben. Die letzte Position (Aerosil® 380, handelsübliches Rheologiehilfsmittel auf Basis hydrophiler pyrogener Kieselsäure der Firma Evonik Degussa, mit einer mittleren Primärteilchengröße von 7 nm, einer BET-Oberfläche in Anlehnung an DIN 66131 von 380 m²/g und einem SiO₂-Gehalt >99,8%, bezogen auf die 2 Stunden bei 1000°C geglühte Substanz) wird unter maximaler Scherung zugegeben. Danach wird für 30 Minuten dispergiert. Anschließend wird in einer Rührwerksmühle mit Mahlkörpern 0,06-0,08 mm und einem Energieeintrag von 0,14-0,18 kWh pro Kg das Mahlgut weiter dispergiert. Die Temperatur des Mahlgutes soll hierbei 65°C nicht überschreiten.

**Tabelle 2: Zusammensetzung des Rheologiehilfsmittels (R1) auf Basis hydrophiler Kieselsäuren**

| Position | Komponente | Gew.-Teile |
|---|---|---|
| 1 | Polyacrylat (A1) | 75 |
| 2 | Butylacetat | 15 |
| 3 | AEROSIL® 380 | 10 |

### Herstellung des erfindungsgemäßen Rheologiehilfsmittels (R2) auf Basis hydrophober Kieselsäuren

Die ersten drei Positionen in Tabelle 3 (Bindemittel (A1) und Lösemittel) werden in der angegebenen Reihenfolge in einen Dissolver zugegeben. Die letzte Position (Aerosil® R812, handelsübliches Rheologiehilfsmittel auf Basis hydrophober pyrogener Kieselsäure der Firma Evonik Degussa, mit einer mittleren Primärteilchengröße von 7 nm, einer BET-Oberfläche in Anlehnung an DIN 66131 von 260 m²/g und einem SiO₂-Gehalt >99,8%, bezogen auf die 2 Stunden bei 1000°C geglühte Substanz) wird unter maximaler Scherung zugegeben. Danach wird für 30 Minuten dispergiert. Anschließend wird in einer Rührwerksmühle mit Mahlkörpern 0,06-0,08 mm und einem Energieeintrag von 0,14-0,18 kWh pro Kg das Mahlgut weiter dispergiert. Die Temperatur des Mahlgutes soll hierbei 65°C nicht überschreiten.

**Tabelle 3: Zusammensetzung des Rheologiehilfsmittels (R2) auf Basis hydrophober Kieselsäuren**

| Position | Komponente | Gew.-Teile |
|---|---|---|
| 1 | Polyacrylat (A1) | 45 |
| 2 | Butylacetat | 20 |
| 3 | Butanol | 25 |
| 4 | AEROSIL® R812 | 10 |

### Formulierung der transparenten Beschichtungsmittelzusammensetzungen der erfindungsgemäßen Beispiele 1 bis 4 und der transparenten Beschichtungsmittelzusammensetzungen der Vergleichsbeispiele V1 bis V2 sowie der entsprechenden Beschichtungen der Beispiele 1 bis 4 und der Vergleichsbeispiele V1 und V2

Zur Herstellung der Stammlacke (S1) und (S2) der erfindungsgemäßen Beispiele und des Stammlackes (VS3) der Vergleichsbeispiele werden die in Tabelle 4 angegebenen Bestandteile in angegebener Reihenfolge (von oben beginnend) in einem geeigneten Gefäß in dieser Reihenfolge eingewogen und innig miteinander verrührt.

**Tabelle 4: Zusammensetzung des Stammlackes in Gew.-Teilen**

| Position | Komponente | Gew.-Teile Stammlack (S1) | Gew.-Teile Stammlack (S2) | Gew.-Teile Stammlack (VS3) |
|---|---|---|---|---|
| 1 | Polyacrylat (A1) | 60 | 60 | 60 |
| 2a1 | Hydrophiles Rheologiehilfsmittel (R1) | 15 | | |
| 2a2 | Hydrophobes Rheologiehilfsmittel (R2) | | 15 | |
| 2' | Rheologie Agens Setalux 91756 ¹⁾* | | | 15 |
| 3 | TINUVIN® 384 ²⁾ | 1,5 | | 1,5 |
| 4 | TINUVIN® 292 ³⁾ | 1,5 | | 1,5 |
| 5 | BYK® 325 ⁴⁾ | 0,2 | | 0,2 |
| 6 | Butylacetat | 23 | | 23 |
| 7 | Nacure® 4167 ⁵⁾ | 2,3 | | 2,3 |

| | | | | |
|---|---|---|---|---|
| Erläuterungen zu Tabelle 4: ¹⁾ Setalux® 91756 = handelsübliches Rheologie Agens der Firma Nuplex Resins, Niederlande, auf Harnstoff-Basis, gelöst bzw. dispergiert in einem Polyacrylat-Bindemittel, mit einem nichtflüchtigen Anteil von 60 Gew.-% ²⁾ Tinuvin® 384 = handelsübliches Lichtschutzmittel auf Basis eines Benztriazols der Firma BASF S.E. ³⁾ Tinuvin® 292 = handelsübliches Lichtschutzmittel auf Basis eines sterisch gehinderten Amins der Firma BASF S.E. ⁴⁾ Byk® 325 = handelsübliches, polyethermodifiziertes Polymethylalkylsiloxan der Firma Byk Chemie ⁵⁾ Nacure® 4167 = handelsüblicher Katalysator auf Basis von aminblockiertem Phosphorsäureteilester der Firma King Industries, nicht flüchtiger Anteil 25% | | | | |

**Tabelle 5: Zusammensetzung der Beschichtungsmittelzusammensetzungen der Beispiele 1 bis 4 und der Vergleichsbeispiele V1 und V2**

| | Beispiel 1 | Beispiel 2 | Beispiel 3 | Beispiel 4 | Vergleich V1 | Vergleich V2 |
|---|---|---|---|---|---|---|
| Stammlack (S1) | 100 | 100 | - | - | - | - |
| Stammlack (S2) | - | - | 100 | 100 | - | - |
| Stammlack (S3) | - | - | - | - | 100 | 100 |
| Härter B-1 | 100 | - | 100 | - | 100 | - |
| Härter B-2 | - | 100 | - | 100 | - | 100 |

### Applikation der Beschichtungsmittelzusammensetzungen der Beispiele 1 bis 4 und der Vergleichsbeispiele V1 und V2

Zur Herstellung der Beschichtungsmittelzusammensetzungen der Beispiele 1 bis 4 und der Vergleichsbeispiele V1 und V2 werden die in Tabelle 5 angegebenen Bestandteile in angegebener Reihenfolge (von oben beginnend) in einem geeigneten Gefäß in dieser Reihenfolge eingewogen und innig miteinander verrührt.
Ein Stahlsubstrat (Bonderblech) wurde mit einer üblichen und bekannten kathodisch abgeschiedenen und eingebrannten Elektrotauchlackierung (Trockenfilmschichtdicke von 20 µm) versehen. Die Bonderbleche wurden vor der Beschichtung mit dem Basislack 1 mit einem handelsüblichen Perthomether vermessen und der Ra Wert ermittelt. Es wird einmal auf "rauer" Qualität mit einem Ra Wert von 0,5-0,6 (Cathoguard 350 der BASF Coatings GmbH) und einmal auf "glatter" Qualität (Cathoguard 500 der BASF Coatings GmbH) mit einem Ra Wert von 0,2-0,3 appliziert.

Auf die so erhaltene Elektrotauchlackierung wurde der handelsübliche schwarze Wasser-Basislack 1 (ColorPrime 1 der BASF Coatings GmbH) mit einer Trockenfilmschichtdicke von 10 bis 20 µm appliziert, 2 min bei Raumtemperatur abgelüftet und mit einem zweiten Auftrag des handelsüblichen schwarzen Wasser-Basislackes 2 (ColorPrime 2 der BASF Coatings GmbH) mit einer Trockenfilmschichtdicke von 10 bis 30 µm (die Summe beider Basislackschichten 1 + 2 beträgt dabei 30 µm) überschichtet, 10 min bei 80°C vorgetrocknet und abgekühlt. Abschließend werden jeweils die Beschichtungsmittelzusammensetzungen der Beispiele 1 bis 4 und der Vergleichsbeispiele V1 und V2 mit einer Fließbecherpistole appliziert und 20 Minuten bei 140°C **senkrecht** eingebrannt. Die Schichtdicke des Klarlackes beträgt 40 µm.

Anschließend wird der Glanz mit Hilfe des Glanzmessgerätes micro-haze plus, Firma Byk bestimmt. Zur Bestimmung der Polierbarkeit wird nach 2h Lagerung bei Umgebungstemperatur auf dem gehärteten Klarlackblech eine Schleifstelle gesetzt (mit exzentrischem Druckluft-Schwingschleifer von 3M, 10000 U/min, Schleifblüte: 3M Trizact 3000er Körnung). Diese Schleifstelle wird anschließend mit Polierpaste aufpoliert (rotativer Polierprozess, Lammfellscheibe, Polierpaste Menzerna Nanopoliercreme PO 106 FA). Anschließend werden Haze und Glanz mit Hilfe des Glanzmessgerätes micro-haze plus, Firma Byk bestimmt.

Das Weißanlaufen wird ebenfalls bestimmt. Hierzu werden die Tafeln in einer Schwitzwasserkammer (analog DIN EN ISO 6270-2 Sept05) 10 Tage lang gelagert. Anschließend wird (nach 24h) eine farbmetrische Messung mit dem Farbmessgerät X-Rite MA 68 II durchgeführt. Die Prüfergebnisse der genannten Untersuchungen sind jeweils in Tabelle 6 dargestellt. Ebenfalls wurde die Windschutzscheibenverklebung geprüft.

### Diskussion der Prüfergebnisse

Die Beschichtungen der Vergleichsbeispiele V1 und V2 auf Basis von Klarlacken mit einem Rheologiehilfsmittel auf Harnstoff-Basis zeigen stets signifikant höhere Short Wave Werte bei einer Klarlackschichtdicke von 40 µm als die erfindungsgemäßen Beschichtungen auf Basis von Klarlacken mit einem Rheologiehilfsmittel auf Aerosil®-Basis. Auf Bonderblechen, welche mit einer gehärteten Elektrotauchlackierung mit "rauer Qualität" beschichtet waren, zeigt sich dieser Unterschied etwas deutlicher als auf Bonderblechen, welche mit einer gehärteten Elektrotauchlackierung mit "glatter Qualität" beschichtet waren.

Demgegenüber zeigen die erfindungsgemäßen Beschichtungen der Beispiele 1 bis 4 auf Basis von Klarlacken mit einem Rheologiehilfsmittel auf Basis pyrogener Kieselsäure sehr deutlich verbesserte Short Wave Werte bei einer Klarlackschichtdicke von 40 µm, und zwar unabhängig davon, ob als Rheologiehilfsmittel eine hydrophil modifizierte pyrogene Kieselsäure ("Aerosil® 380", Rheologiehilfsmittel (R1), Beispiele 1a, 1 b, 2a sowie 2b) oder eine hydrophob modifizierte pyrogene Kieselsäure ("Aerosil® R812", Rheologiehilfsmittel (R2), Beispiele 3a, 3b, 4a sowie 4b) eingesetzt wurde.

**Tabelle 6: Ergebnisse der Prüfung der optischen Eigenschaften und der Polierbarkeit der Beschichtungen**

| | Beispiel 1a | Beispiel 2a | Beispiel 1b | Beispiel 2b | Beispiel 3a | Beispiel 4a | Beispiel 3b | Beispiel 4b | Vergleich V1a | Vergleich V2a | Vergleich V1b | Vergleich V2b |
|---|---|---|---|---|---|---|---|---|---|---|---|---|
| Ra/ [µm](Bonderblech) | 0,5-0,6 | 0,5-0,6 | 0,2-0,3 | 0,2-0,3 | 0,5-0,6 | 0,5-0,6 | 0,2-0,3 | 0,2-0,3 | 0,5-0,6 | 0,5-0,6 | 0,2-0,3 | 0,2-0,3 |
| SW (senkrecht@40µm) | 30-35 | 30-35 | 20-25 | 20-25 | 30-35 | 30-35 | 20-25 | 20-25 | **40-45** | **40-45** | **30-35** | **30-35** |
| LW (senkrecht@40µm) | 8-12 | 8-12 | 8-12 | 8-12 | 8-12 | 8-12 | 8-12 | 8-12 | 8-12 | 8-12 | 8-12 | 8-12 |
| Glanz | >85 E | >85 E | >85 E | >85 E | >85 E | >85 E | >85 E | >85 E | >85 E | >85 E | >85 E | >85 E |
| Glanz nach 9s Polieren einer mattgeschliffenen Oberfläche | 60-65 | 75-85 | 60-65 | 75-85 | 60-65 | 75-85 | 60-65 | 75-85 | 60-65 | 75-85 | 60-65 | 75-85 |
| dL* (45°) nach 240 h KK | <1,0 | <1,0 | <1,0 | <1,0 | <1,0 | <1,0 | <1,0 | <1,0 | 3,5 | 4,0 | 2,8 | 3,5 |

Besonders auffällig und für die erfindungsgemäßen "füllerlosen" Mehrschichtlackierungen besonders wichtig zeigt die Verwendung von Klarlacken mit einem Rheologiehilfsmittel auf Basis pyrogener Kieselsäure im Gegensatz zur Verwendung von Klarlacken mit einem Rheologiehilfsmittel auf Harnstoff-Basis eine stark verringerte Tendenz zum Weißanlaufen. So ist nach Vermessung der dL* Wert sämtlicher Systeme mit Klarlacken Aerosilpasten kleiner 1,0, während der Wert bei der Verwendung von Klarlacken mit ausschließlich Harnstoffbasierten Rheologiehilfsmitteln deutlich höher liegt.

Der Vergleich der erfindungsgemäßen Beispiele 1 a und 1 b mit den entsprechenden erfindungsgemäßen Beispielen 2a und 2b sowie der Vergleich der erfindungsgemäßen Beispiele 3a und 3b mit den entsprechenden erfindungsgemäßen Beispiele 4a und 4b wiederum verdeutlicht, dass durch die Verwendung einer Härtermischung mit einem aliphatischen Isocyanatgrundkörper und einem cycloaliphatischen Isocyanatgrundkörper die Polierbarkeit der resultierenden Beschichtungen signifikant verbessert wird, und dies unabhängig vom jeweils verwendeten Rheologiehilfsmittel.

Zusätzlich zeichnen sich die erfindungsgemäßen Beschichtungen durch eine sehr gute Scheibenverklebung, auch bei überbrannten Systemen, aus.

## Patentansprüche

1. Effekt- und/oder farbgebende füllerlose Mehrschichtlackierung, die dadurch herstellbar ist, dass
(I) zunächst eine Grundierungsbeschichtungszusammensetzung (G) auf einem Substrat aufgebracht und ggf. gehärtet wird,
(II) eine erste pigmentierte Basislackbeschichtungszusammensetzung (BL1) auf der in Stufe (I) erhaltenen Grundierung aufgebracht wird,
(III) ggf. eine zweite pigmentierte Basislackbeschichtungszusammensetzung (BL2) auf der in Stufe (II) erhaltenen ersten Basislackschicht aufgebracht wird,
(IV) eine transparente Beschichtungsmittelzusammensetzung (KL) auf Basis mindestens einer Polyhydroxylgruppenhaltigen Verbindung (A) und mindestens einer Polyisocyanatgruppen-haltigen Komponente (B) auf der in Stufe (II) erhaltenen ersten Basislackschicht oder - falls eine zweite Basislackbeschichtungszusammensetzung (BL2) aufgebracht worden ist - auf der in Stufe (III) erhaltenen zweiten Basislackschicht aufgebracht wird und
(V) die erste Basislackschicht, die ggf. vorhandene zweite Basislackschicht und die transparente Lackschicht gemeinsam gehärtet werden,
**dadurch gekennzeichnet, dass**
die transparente Beschichtungsmittelzusammensetzung (KL)
(i) mindestens ein Rheologiehilfsmittel (R) auf Basis pyrogener Kieselsäure und
(ii) mindestens eine Polyisocyanatgruppen-haltige Komponente (B), die zusätzlich mindestens eine Struktureinheit der Formel (I)
-NR-(X-SiR"x(OR')3-x) (I),
und/oder mit mindestens eine Struktureinheit der Formel (II)
-N(X-SiR"x(OR')3-x)n(X'-SiR"y(OR')3-y)m (II),
aufweist, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X,X' = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2, m+n = 2 sowie x, y = 0 bis 2 ist, enthält.

2. Effekt- und/oder farbgebende Mehrschichtlackierung nach Anspruch 1, **dadurch gekennzeichnet, dass** die transparente Beschichtungsmittelzusammensetzung (KL) das Rheologiehilfsmittel (R) in einer Gesamtmenge von 0,01 bis 10 Gew.-%, besonders bevorzugt in einer Gesamtmenge von 0,5 bis 5,0 Gew.-%, bezogen auf den Bindemittelanteil der transparenten Beschichtungsmittelzusammensetzung, enthält.

3. Effekt- und/oder farbgebende Mehrschichtlackierung nach Anspruch 1 oder 2, **dadurch gekennzeichnet, dass** das in der transparente Beschichtungsmittelzusammensetzung (KL) eingesetzte Rheologiehilfsmittel (R) auf Basis pyrogener Kieselsäure eine Primärteilchengröße von <50 nm aufweist.

4. Effekt- und/oder farbgebende Mehrschichtlackierung nach einem der Ansprüche 1 bis 3, **dadurch gekennzeichnet, dass** die transparente Beschichtungsmittelzusammensetzung (KL) als Rheologiehilfsmittel (R) mindestens ein Rheologiehilfsmittel (R1) auf der Basis hydrophiler Kieselsäuren oder mindestens ein Rheologiehilfsmittel (R2) auf der Basis hydrophober Kieselsäuren oder eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren enthält.

5. Effekt- und/oder farbgebende Mehrschichtlackierung nach einem der Ansprüche 1 bis 4, **dadurch gekennzeichnet, dass** in der Polyisocyanatgruppenhaltigen Komponente (B) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in der Polyisocyanatgruppenhaltigen Komponente (B) vorhandenen Isocyanatgruppen zu Struktureinheiten (I) und/oder (II), bevorzugt zu Struktureinheiten (I) und (II), umgesetzt worden sind.

6. Effekt- und/oder farbgebende Mehrschichtlackierung nach einem der Ansprüche 1 bis 5, **dadurch gekennzeichnet, dass** in der Polyisocyanatgruppen-haltigen Komponente (B) der Gesamtgehalt an Struktureinheiten (I) zwischen 3 und 90 mol-%, bevorzugt zwischen 5 und 70 mol-%, jeweils bezogen auf die Gesamtheit der Struktureinheiten (I) plus (II), und der Gesamtgehalt an Struktureinheiten (II) zwischen 97 und 10 mol-%, bevorzugt zwischen 95 und 30 mol-%, jeweils bezogen auf die Gesamtheit der Struktureinheiten (I) plus (II), liegt.

7. Effekt- und/oder farbgebende Mehrschichtlackierung nach einem der Ansprüche 1 bis 6, **dadurch gekennzeichnet, dass** die transparente Beschichtungsmittelzusammensetzung (KL) als Polyisocyanatgruppen-haltige Komponente (B)
(B1) mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper mit freien oder blockierten Isocyanatgruppen und
(B2) mindestens eine, von der Komponente (B1) verschiedene Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper mit freien oder blockierten Isocyanatgruppen,
enthält, wobei die Komponente (B1) und/oder die Komponente (B2) mindestens eine Struktureinheit der Formel (I)
-NR-(X-SiR"x(OR')3-x) (I),
und/oder mindestens eine Struktureinheit der Formel (II)
-N(X-SiR"x(OR')3-x)n(X'-SiR"y(OR')3-y)m (II),
aufweisen, wobei die Substituenten jeweils die in Anspruch 1 genannte Bedeutung haben.

8. Effekt- und/oder farbgebende Mehrschichtlackierung nach Anspruch 7, **dadurch gekennzeichnet, dass** in der transparenten Beschichtungsmittelzusammensetzung (KL) die Komponente (B1) in einer solchen Menge eingesetzt wird, dass der Bindemittelanteil des isocyanatgruppenhaltigen Grundkörpers der Komponente (B1) zwischen 5 und 45 Gew.% , bevorzugt zwischen 15 und 35 Gew.%, beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2) und die Mischung der Komponenten (B1) plus (B2) sowohl Struktureinheiten (I) als auch Struktureinheiten (II) aufweist.

9. Effekt- und/oder farbgebende Mehrschichtlackierung nach einem der Anspruch 7 oder 8, **dadurch gekennzeichnet, dass** in der transparenten Beschichtungsmittelzusammensetzung (KL) der Polyisocyanatgrundkörper der Verbindung (B1) Isophorondiisocyanat und/oder 4,4'-Methylendicyclohexyldiisocyanat und/oder deren Isocyanurat - Trimeres und/oder deren Allophanat - Dimeres und/- oder deren Biuret - Dimeres und/oder der Polyisocyanatgrundkörper der Verbindung (B2) 1,6-Hexamethylendiisocyanat und/oder deren Isocyanurat - Trimeres und/oder deren Allophanat - Dimeres und/oder deren Biuret - Dimeres ist.

10. Effekt- und/oder farbgebende Mehrschichtlackierung nach einem der Ansprüche 1 bis 9, **dadurch gekennzeichnet, dass** in der transparenten Beschichtungsmittelzusammensetzung (KL) in der Komponente (B1) 0 bis 34 mol-%, bevorzugt weniger als 5,0 mol-%, besonders bevorzugt weniger als 2,5 mol-%, und ganz besonders bevorzugt keine der ursprünglich vorhandenen Isocyanatgruppen zu Struktureinheiten (I) und/oder (II) umgesetzt worden sind und/oder
in der Komponente (B2) zwischen 10 und 90 mol-%, bevorzugt zwischen 20 und 80 mol-% und besonders bevorzugt zwischen 30 und 70 mol-%, der ursprünglich vorhandenen Isocyanatgruppen zu Struktureinheiten (I) und/oder (II), bevorzugt zu Struktureinheiten (I) und (II), umgesetzt worden sind
und/oder
in der Mischung der Polyisocyanat-Komponente (B1) plus der Polyisocyanat-Komponente (B2) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in (B1) plus (B2) vorhandenen Isocyanatgruppen zu Struktureinheiten (I) und/oder (II), bevorzugt zu Struktureinheiten (I) und (II), umgesetzt worden sind.

11. Verfahren zur Herstellung von farb- und/oder effektgebenden füllerlosen Mehrschichtlackierungen nach einem der Ansprüche 1 bis 10, **dadurch gekennzeichnet, dass**
(I) zunächst die Grundierungsbeschichtungszusammensetzung (G) auf einem Substrat aufgebracht und ggf. gehärtet wird,
(II) die erste pigmentierte Basislackbeschichtungszusammensetzung (BL1) auf der in Stufe (I) erhaltenen Grundierung aufgebracht wird,
(III) ggf. die zweite pigmentierte Basislackbeschichtungszusammensetzung (BL2) auf der in Stufe (II) erhaltenen ersten Basislackschicht aufgebracht wird,
(IV) die transparente Beschichtungsmittelzusammensetzung (KL) auf der in Stufe (II) erhaltenen ersten Basislackschicht oder - falls eine zweite Basislackbeschichtungszusammensetzung (BL2) aufgebracht worden ist - auf der in Stufe (III) erhaltenen zweiten Basislackschicht aufgebracht wird und
(V) die erste Basislackschicht, die ggf. vorhandene zweite Basislackschicht und die transparente Lackschicht gemeinsam gehärtet werden.

12. Verfahren nach Anspruch 11, **dadurch gekennzeichnet, dass** die Beschichtungsmittelzusammensetzungen (BL1), (BL2) und (KL) mit Hilfe der pneumatischen Spritzapplikation oder der elektrostatischen Spritzapplikation (ESTA), vorzugsweise mit Hochrotationsglocken, appliziert werden.

13. Verfahren nach Anspruch 11 oder 12, **dadurch gekennzeichnet, dass** die Basislackbeschichtungszusammensetzung (BL1) und die ggf. vorhandene Basislackbeschichtungszusammensetzung (BL2) mit einer solchen Naßfilmschichtdicke appliziert werden, dass nach der Härtung eine gemeinsame Trockenfilmschichtdicke des Basislacks (BL1) und ggf. Basislacks (BL2) von insgesamt 15 bis 40 µm resultiert und/oder die transparente Beschichtungsmittelzusammensetzung (KL) mit einer solchen Naßfilmschichtdicke appliziert wird, dass nach der Härtung eine Trockenfilmschichtdicke des Klarlacks (KL) von 20 bis 50 µm resultiert.

14. Verfahren nach einem der Ansprüche 11 bis 13, **dadurch gekennzeichnet, dass** die Basislackbeschichtungszusammensetzung (BL1) und die ggf. aufgebrachte Basislackbeschichtungszusammensetzung (BL2) wässrige Beschichtungsmittelzusammensetzungen sind.

15. Verfahren nach einem der Ansprüche 11 bis 14, **dadurch gekennzeichnet, dass** das Substrat aus Metall und/oder Kunststoff besteht.

16. Verwendung der füllerlosen Mehrschichtlackierungen nach einem der Ansprüche 1 bis 10 in der Automobilserien(OEM)lackierung, für die Autoreparaturlackierung und/oder für die Beschichtung von Automobilanbauteilen und/oder die Beschichtung von Nutzfahrzeugen und/oder die Beschichtung von Kunststoffteilen.

## Claims

1. Multicoat, surfacer-less effect and/or color paint system producible by
(I) first applying a primer coating composition (G) to a substrate and optionally curing it,
(II) applying a first pigmented basecoat coating composition (BL1) to the primer obtained in stage (I),
(III) optionally applying a second pigmented basecoat coating composition (BL2) to the first basecoat film, obtained in stage (II),
(IV) applying a transparent coating material composition (KL) based on at least one polyhydroxyl group-containing compound (A) and at least one polyisocyanate group-containing component (B) to the first basecoat film, obtained in stage (II), or - if a second basecoat coating composition (BL2) has been applied - to the second basecoat film, obtained in stage (III), and
(V) jointly curing the first basecoat film, the second basecoat film, where present, and the transparent coating film,
**characterized in that**
the transparent coating material composition (KL) comprises
(i) at least one rheological assistant (R) based on fumed silica and
(ii) at least one polyisocyanate group-containing component (B) which additionally has at least one structural unit of the formula (I)
-NR-(X-SiR"x(OR')3-x) (I),
and/or with at least one structural unit of the formula (II)
-N(X-SiR''x(OR')3-x)n(X'-SiR''y(OR')3-y)m (II),
where
R = hydrogen, alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
R' = hydrogen, alkyl or cycloalkyl, it being possible for the carbon chain to be interrupted by nonadjacent oxygen, sulfur or NRa groups, X,X' = linear and/or branched alkylene or cycloalkylene radical having 1 to 20 carbon atoms,
R'' = alkyl, cycloalkyl, aryl or aralkyl, it being possible for the carbon chain to be interrupted by nonadjacent oxygen, sulfur or NRa groups,
n = 0 to 2, m = 0 to 2, m+n = 2, and x, y = 0 to 2.

2. Multicoat effect and/or color paint system according to Claim 1, **characterized in that** the transparent coating material composition (KL) contains the rheological assistant (R) in a total amount of 0.01 to 10 wt%, more preferably in a total amount of 0.5 to 5.0 wt%, based on the binder fraction of the transparent coating material composition.

3. Multicoat effect and/or color paint system according to Claim 1 or 2, **characterized in that** the rheological assistant (R) based on fumed silica that is used in the transparent coating material composition (KL) has a primary particle size of <50 nm.

4. Multicoat effect and/or color paint system according to any of Claims 1 to 3, **characterized in that** the transparent coating material composition (KL) comprises as rheological assistant (R) at least one rheological assistant (R1) based on hydrophilic silicas or at least one rheological assistant (R2) based on hydrophobic silicas, or a mixture of at least one rheological assistant (R1) based on hydrophilic silicas and at least one rheological assistant (R2) based on hydrophobic silicas.

5. Multicoat effect and/or color paint system according to any of Claims 1 to 4, **characterized in that** in the polyisocyanate group-containing component (B) between 10 and 80 mol%, preferably between 20 and 70 mol%, more preferably between 25 and less than 50 mol% and very preferably between 31 and 45 mol% of the isocyanate groups originally present in the polyisocyanate group-containing component (B) have undergone reaction to form structural units (I) and/or (II), preferably to form structural units (I) and (II).

6. Multicoat effect and/or color paint system according to any of Claims 1 to 5, **characterized in that** in the polyisocyanate group-containing component (B) the total amount of structural units (I) is between 3 and 90 mol%, preferably between 5 and 70 mol%, based in each case on the entirety of the structural units (I) plus (II), and the total amount of structural units (II) is between 97 and 10 mol%, preferably between 95 and 30 mol%, based in each case on the entirety of the structural units (I) plus (II).

7. Multicoat effect and/or color paint system according to any of Claims 1 to 6, **characterized in that** the transparent coating material composition (KL) comprises as polyisocyanate group-containing component (B)
(B1) at least one polyisocyanate group-containing compound (B1) having free or blocked isocyanate groups and having a cycloaliphatic polyisocyanate parent structure and/or a polyisocyanate parent structure having free or blocked isocyanate groups that is derived from such a cycloaliphatic polyisocyanate by trimerization, dimerization, urethane formation, biuret formation, uretdione formation and/or allophanate formation, and
(B2) at least one polyisocyanate group-containing compound (B2) different from component (B1) and having free or blocked isocyanate groups and having an acyclic, aliphatic polyisocyanate parent structure and/or a polyisocyanate parent structure having free or blocked isocyanate groups that is derived from such an acyclic aliphatic polyisocyanate by trimerization, dimerization, urethane formation, biuret formation, uretdione formation and/or allophanate formation,
wherein component (B1) and/or component (B2) have at least one structural unit of the formula (I)
-NR-(X-SiR"x(OR')3-x) (I),
and/or at least one structural unit of the formula (II)
-N(X-SiR"x(OR')3-x)n(X'-SiR"y(OR')3-y)m (II),
where the substituents each have the definition stated in Claim 1.

8. Multicoat effect and/or color paint system according to Claim 7, **characterized in that** in the transparent coating material composition (KL) component (B1) is used in an amount such that the binder fraction of the isocyanate group-containing parent structure of component (B1) is between 5 and 45 wt%, preferably between 15 and 35 wt%, based in each case on the sum of the binder fraction of the isocyanate group-containing parent structure of component (B1) plus the binder fraction of the isocyanate group-containing parent structure of component (B2), and the mixture of components (B1) plus (B2) has not only structural units (I) but also structural units (II).

9. Multicoat effect and/or color paint system according to either of Claims 7 and 8, **characterized in that** in the transparent coating material composition (KL) the polyisocyanate parent structure of compound (B1) is isophorone diisocyanate and/or 4,4'-methylene-dicyclohexyl diisocyanate and/or the isocyanurate trimer thereof and/or the allophanate dimer thereof and/or the biuret dimer thereof, and/or the polyisocyanate parent structure of compound (B2) is 1,6-hexamethylene diisocyanate and/or the isocyanurate trimer thereof and/or the allophanate dimer thereof and/or the biuret dimer thereof.

10. Multicoat effect and/or color paint system according to any of Claims 1 to 9, **characterized in that** in the transparent coating material composition (KL) in component (B1) 0 to 34 mol%, preferably less than 5.0 mol%, more preferably less than 2.5 mol%, and very preferably none of the isocyanate groups originally present have undergone reaction to form structural units (I) and/or (II)
and/or
in component (B2) between 10 and 90 mol%, preferably between 20 and 80 mol% and more preferably between 30 and 70 mol% of the isocyanate groups originally present have undergone reaction to form structural units (I) and/or (II), preferably to form structural units (I) and (II)
and/or
in the mixture of polyisocyanate component (B1) plus polyisocyanate component (B2) between 10 and 80 mol%, preferably between 20 and 70 mol%, more preferably between 25 and less than 50 mol% and very preferably between 31 and 45 mol% of the isocyanate groups originally present in (B1) plus (B2) have undergone reaction to form structural units (I) and/or (II), preferably to form structural units (I) and (II).

11. Method for producing multicoat, surfacer-less color and/or effect paint systems according to any of Claims 1 to 10, **characterized in that**
(I) first the primer coating composition (G) is applied to a substrate and optionally cured,
(II) the first pigmented basecoat coating composition (BL1) is applied to the primer obtained in stage (I),
(III) optionally the second pigmented basecoat coating composition (BL2) is applied to the first basecoat film, obtained in stage (II),
(IV) the transparent coating material composition (KL) is applied to the first basecoat film, obtained in stage (II), or - if a second basecoat coating composition (BL2) has been applied - to the second basecoat film, obtained in stage (III), and
(V) the first basecoat film, the second basecoat film, where present, and the transparent coating film are jointly cured.

12. Method according to Claim 11, **characterized in that** the coating material compositions (BL1), (BL2) and (KL) are applied by means of pneumatic spray application or of electrostatic spray application (ESTA), preferably using high-speed rotating bells.

13. Method according to Claim 11 or 12, **characterized in that** the basecoat coating composition (BL1) and the basecoat coating composition (BL2), where present, are applied with a wet film thickness such that curing results in a joint dry film thickness of basecoat material (BL1) and optionally basecoat material (BL2) of 15 to 40 µm in total, and/or the transparent coating material composition (KL) is applied with a wet film thickness such that curing results in a dry film thickness of the clearcoat material (KL) of 20 to 50 µm.

14. Method according to any of Claims 11 to 13, **characterized in that** the basecoat coating composition (BL1) and the optionally applied basecoat coating composition (BL2) are aqueous coating material compositions.

15. Method according to any of Claims 11 to 14, **characterized in that** the substrate consists of metal and/or plastic.

16. Use of the surfacer-less multicoat paint systems according to any of Claims 1 to 10 in automotive OEM finishing, for automotive refinishing and/or for the coating of parts for installation in or on motor vehicles and/or for the coating of utility vehicles and/or for the coating of plastics parts.

## Revendications

1. Laquage multicouche sans charge, conférant un effet et/ou une couleur, qui peut être préparé en ce que
(I) une composition (G) de revêtement d'apprêt est d'abord appliquée sur un substrat et le cas échéant durcie,
(II) une première composition pigmentée (BL1) de revêtement de laque de base est appliquée sur l'apprêt obtenu dans l'étape (I),
(III) le cas échéant, une deuxième composition pigmentée (BL2) de revêtement de laque de base est appliquée sur la première couche de laque de base obtenue dans l'étape (II),
(IV) une composition transparente (KL) d'agent de revêtement à base d'au moins un composé (A) contenant des groupes polyhydroxyle et d'au moins un composant (B) contenant des groupes polyisocyanate est appliquée sur la première couche de laque de base obtenue dans l'étape (II) ou - si une deuxième composition (BL2) de revêtement de laque de base a été appliquée - sur la deuxième couche de laque de base obtenue dans l'étape (III) et
(V) la première couche de laque de base, la deuxième couche de laque de base le cas échéant présente et la couche de laque transparente sont durcies ensemble,
**caractérisé en ce que** la composition transparente (KL) d'agent de revêtement contient
(i) au moins un adjuvant de rhéologie (R) à base de silice pyrogène et
(ii) au moins un composant (B) contenant des groupes polyisocyanate, qui présente en plus au moins une unité structurale de formule (I)
-NR- (X-SiR"ₓ (OR')₃₋ₓ) (I)
et/ou présentant au moins une unité structurale de formule (II)
-N(X-SiR"ₓ(OR')₃₋ₓ)ₙ(X'-SiR"_{y}(OR')_{3-y})ₘ (II),
dans lesquelles
R = hydrogène, alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non adjacents,
X,X' = un radical alkylène linéaire et/ou ramifié ou cycloalkylène, comprenant 1 à 20 atomes de carbone,
R" = alkyle, cycloalkyle, aryle ou aralkyle, la chaîne carbonée pouvant être interrompue par des groupes oxygène, soufre ou NRa non adjacents,
n = 0 à 2, m = 0 à 2, m + n = 2 et x, y = 0 à 2.

2. Laquage multicouche conférant un effet et/ou une couleur selon la revendication 1, **caractérisé en ce que** la composition transparente (KL) d'agent de revêtement contient l'adjuvant de rhéologie (R) en une quantité totale de 0,01 à 10% en poids, de manière particulièrement préférée en une quantité totale de 0,5 à 5,0% en poids, par rapport à la proportion de liant de la composition transparente d'agent de revêtement.

3. Laquage multicouche conférant un effet et/ou une couleur selon la revendication 1 ou 2, **caractérisé en ce que** l'adjuvant de rhéologie (R) à base de silice pyrogène utilisé dans la composition transparente (KL) d'agent de revêtement présente une grosseur de particule primaire < 50 nm.

4. Laquage multicouche conférant un effet et/ou une couleur selon l'une quelconque des revendications 1 à 3, **caractérisé en ce que** la composition transparente (KL) d'agent de revêtement contient, comme adjuvant de rhéologie (R), au moins un adjuvant de rhéologie (R1) à base de silices hydrophiles ou au moins un adjuvant de rhéologie (R2) à base de silices hydrophobes ou un mélange d'au moins un adjuvant de rhéologie (R1) à base de silices hydrophiles et d'au moins un adjuvant de rhéologie (R2) à base de silices hydrophobes.

5. Laquage multicouche conférant un effet et/ou une couleur selon l'une quelconque des revendications 1 à 4, **caractérisé en ce que**, dans le composant (B) contenant des groupes polyisocyanate, entre 10 et 80% en mole, de préférence entre 20 et 70% en mole, de manière particulièrement préférée entre 25 et moins de 50% en mole et de manière tout particulièrement préférée entre 31 et 45% en mole des groupes isocyanate initialement présents dans le composant (B) contenant des groupes polyisocyanate ont été transformés en unités structurales (I) et/ou (II), de préférence en unités structurales (I) et (II).

6. Laquage multicouche conférant un effet et/ou une couleur selon l'une quelconque des revendications 1 à 5, **caractérisé en ce que**, dans le composant (B) contenant des groupes polyisocyanate, la teneur totale en unités structurales (I) est située entre 3 et 90% en mole, de préférence entre 5 et 70% en mole, à chaque fois par rapport à la totalité des unités structurales (I) plus (II), et la teneur totale en unités structurales (II) est située entre 97 et 10% en mole, de préférence entre 95 et 30% en mole, à chaque fois par rapport à la totalité des unités structurales (I) plus (II).

7. Laquage multicouche conférant un effet et/ou une couleur selon l'une quelconque des revendications 1 à 6, **caractérisé en ce que** la composition transparente (KL) d'agent de revêtement contient, comme composant (B) contenant des groupes polyisocyanate,
(B1) au moins un composé (B1) contenant des groupes polyisocyanate présentant des groupes isocyanate libres ou bloqués et présentant un corps de base polyisocyanate cycloaliphatique et/ou un corps de base polyisocyanate dérivé d'un tel polyisocyanate cycloaliphatique par trimérisation, dimérisation, formation d'uréthane, de biuret, d'uretdione et/ou d'allophanate, présentant des groupes isocyanate libres ou bloqués,
(B2) au moins un composé (B2) contenant des groupes polyisocyanate, différent du composant (B1), présentant des groupes isocyanate libres ou bloqués et présentant un corps de base polyisocyanate acyclique, aliphatique et/ou un corps de base polyisocyanate dérivé d'un tel polyisocyanate acyclique, aliphatique par trimérisation, dimérisation, formation d'uréthane, de biuret, d'uretdione et/ou d'allophanate, présentant des groupes isocyanate libres ou bloqués et
le composant (B1) et/ou le composant (B2) contenant au moins une unité structurale de formule (I)
-NR- (X-SiR"x (OR') ₃₋ₓ) (I),
et/ou au moins une unité structurale de formule (II)
-N(X-SiR"ₓ(OR')₃₋ₓ)ₙ(X'-SiR"_{y}(OR')_{3-y})ₘ (II),
les substituants présentant à chaque fois la signification mentionnée dans la revendication 1.

8. Laquage multicouche conférant un effet et/ou une couleur selon la revendication 7, **caractérisé en ce que**, dans la composition transparente (KL) d'agent de revêtement, le composé (B1) est utilisé en une quantité telle que la proportion de liant du corps de base contenant des groupes isocyanate du composant (B1) est située entre 5 et 45% en poids, de préférence entre 15 et 35% en poids, à chaque fois par rapport à la somme de la proportion de liant du corps de base contenant des groupes isocyanate du composant (B1) plus la proportion de liant du corps de base contenant des groupes isocyanate du composant (B2) et le mélange des composants (B1) plus (B2) présente tant des unités structurales (I) que des unités structurales (II).

9. Laquage multicouche conférant un effet et/ou une couleur selon l'une quelconque des revendications 7 ou 8, **caractérisé en ce que**, dans la composition transparente (KL) d'agent de revêtement, le corps de base polyisocyanate du composé (B1) est le diisocyanate d'isophorone et/ou le diisocyanate de 4,4'-méthylènedicyclohexyle et/ou son trimère d'isocyanurate et/ou son dimère d'allophanate et/ou son dimère de biuret et/ou le corps de base polyisocyanate du composé (B2) est le diisocyanate de 1,6-hexaméthylène et/ou son trimère d'isocyanurate et/ou son dimère d'allophanate et/ou son dimère de biuret.

10. Laquage multicouche conférant un effet et/ou une couleur selon l'une quelconque des revendications 1 à 9, **caractérisé en ce que**, dans la composition transparente (KL) d'agent de revêtement, dans le composant (B1), 0 à 34% en mole, de préférence moins de 5,0% en mole, de manière particulièrement préférée moins de 2,5% en mole et de manière tout particulièrement préférée aucun des groupes isocyanate initialement présents ont été transformés en unités structurales (I) et/ou (II) et/ou, dans le composant (B2), entre 10 et 90% en mole, de préférence entre 20 et 80% en mole et de manière particulièrement préférée entre 30 et 70% en mole, des groupes isocyanate initialement présents ont été transformés en unités structurales (I) et/ou (II), de préférence en unités structurales (I) et (II) et/ou, dans le mélange du composant polyisocyanate (B1) plus le composant polyisocyanate (B2), entre 10 et 80% en mole, de préférence entre 20 et 70% en mole, de manière particulièrement préférée entre 25 et moins de 50% en mole et de manière tout particulièrement préférée entre 31 et 45% en mole, des groupes isocyanate initialement présents dans (B1) plus (B2) ont été transformés en unités structurales (I) et/ou (II), de préférence en unités structurales (I) et (II).

11. Procédé pour la production de laquages multicouches sans charge conférant un effet et/ou une couleur selon l'une quelconque des revendications 1 à 10, **caractérisé en ce que**
(I) la composition (G) de revêtement d'apprêt est d'abord appliquée sur un substrat et le cas échéant durcies,
(II) la première composition pigmentée (BL1) de revêtement de laque de base est appliquée sur l'apprêt obtenu dans l'étape (I),
(III) le cas échéant, la deuxième composition pigmentée (BL2) de revêtement de laque de base est appliquée sur la première couche de laque de base obtenue dans l'étape (II),
(IV) la composition transparente (KL) d'agent de revêtement est appliquée sur la première couche de laque de base obtenue dans l'étape (II) ou - si une deuxième composition (BL2) de revêtement de laque de base a été appliquée - sur la deuxième couche de laque de base obtenue dans l'étape (III) et
(V) la première couche de laque de base, la deuxième couche de laque de base le cas échéant présente et la couche de laque transparente sont durcies ensemble.

12. Procédé selon la revendication 11, **caractérisé en ce que** les compositions (BL1), (BL2) et (KL) d'agent de revêtement sont appliquées à l'aide de l'application par pulvérisation pneumatique ou de l'application par pulvérisation électrostatique (ESTA), de préférence à l'aide de cloches à rotation rapide.

13. Procédé selon la revendication 11 ou 12, **caractérisé en ce que** la composition (BL1) de revêtement de laque de base et la composition (BL2) de revêtement de laque de base le cas échéant présente sont appliquées à une épaisseur de couche de film humide telle qu'il en résulte, après durcissement, une épaisseur globale de couche de film sec de la laque de base (BL1) et le cas échéant de la laque de base (BL2) d'au total 15 à 40 µm et/ou la composition transparente (KL) d'agent de revêtement est appliquée à une épaisseur de couche de film humide telle qu'il en résulte, après le durcissement, une épaisseur de couche de film sec de la laque claire (KL) de 20 à 50 µm.

14. Procédé selon l'une quelconque des revendications 11 à 13, **caractérisé en ce que** la composition (BL1) de revêtement de laque de base et la composition (BL2) de revêtement de laque de base le cas échéant appliquée sont des compositions aqueuses d'agent de revêtement.

15. Procédé selon l'une quelconque des revendications 11 à 14, **caractérisé en ce que** le substrat est en métal et/ou en matériau synthétique.

16. Utilisation des laquages multicouches sans charge selon l'une quelconque des revendications 1 à 10 dans le laquage en série d'automobiles, pour le laquage de réparation d'automobiles et/ou pour le revêtement de pièces pour automobiles et/ou le revêtement de véhicules utilitaires et/ou le revêtement de pièces en matériau synthétique.
